(19) Europäisches Patentamt
European Patent Office
Office européen des brevets

(11) **EP 2 270 432 B1**

(12) **EUROPEAN PATENT SPECIFICATION**

(45) Date of publication and mention
of the grant of the patent:
**04.04.2018  Bulletin 2018/14**

(51) Int Cl.:
***G01C 21/34*** *(2006.01)*

(21) Application number: **10167691.4**

(22) Date of filing: **29.06.2010**

(54) **Navigation device, route-search server, and route-search system**

Navigationsvorrichtung, Routensuchserver und Routensuchsystem

Dispositif de navigation, serveur de recherche de route et système de recherche de route

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.06.2009  JP 2009153941**

(43) Date of publication of application:
**05.01.2011  Bulletin 2011/01**

(73) Proprietors:
• **Hitachi, Ltd.**
  **Tokyo 100-8280 (JP)**
• **Clarion Co., Ltd.**
  **Bunkyo-ku**
  **Tokyo 112-8608 (JP)**

(72) Inventors:
• **Okude, Mariko**
  **Tokyo 100-8220 (JP)**
• **Fushiki, Takumi**
  **Tokyo 100-8220 (JP)**
• **Machii, Kimiyoshi**
  **Tokyo 100-8220 (JP)**
• **Amaya, Shinichi**
  **Tokyo 112-8608 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 1 035 403     EP-A1- 1 508 778**
**US-B1- 6 381 535**

**Description**

BACKGROUND OF THE INVENTION

1. Field of the Invention

The present invention relates to a navigation device, a route-search server, and a route-search system.

2. Description of the Related Art

Navigation devices are widely used for guiding a vehicle having such a device onboard to the destination by analyzing latest information received from an externally-located information center or via broadcasting or communication equipment. An increasing number of navigation device has come to include a basic function of guiding a vehicle on a time-saving route for the destination by analyzing the latest traffic information, including congestion or travel time, obtained from a traffic information center or via FM Teletext Multiplex Broadcasting etc. Navigation devices have come to include another basic function of guiding a vehicle on an optimized route by analyzing traffic information estimating congestion of nearby roads at a predetermined future time and received from an information center for choosing a route by which the vehicle can shorten the time to reach the destination and for estimating the arrival time more accurately. Alternatively, there has been provided a route-guide system which obtains an optimized route calculated previously at an information center based on the latest traffic information for a vehicle to be guided to the destination.

In addition, another attempt is made for improving navigation service by incorporating an expanded volume of latest information including traffic information and other kind of information stored in external websites. For example, a portal site provides itinerary-planning support service to website visitors accessing from their home, and the provided service includes various attribute information such as routes for the destination, departure times, and rest stops etc. obtained by analyzing the latest information on toll road, charge and busy hour of facility, and event. In another existing service, itinerary information planned on a portal site can be transmitted to a car navigation device through a communication medium for making a route for the destination and for guiding a vehicle on such a route.

For example, Japanese Patent Laid-open Publication No. H10-19588 (hereinafter called Patent Document 1) discloses a navigation system which uses the result of route search conducted by a traffic information center in response to a request sent from an on-board navigation apparatus. An object of the navigation system disclosed in Patent Document 1 is to provide the on-board car navigation device at a reduced cost because the configuration of the on-board car navigation device for obtaining the latest information on route search can be simplified if the traffic information center has such latest information. However, a vehicle travelling may deviate from a currently-travelling route sometimes. In such a case, the traffic information center must search a route anew which connects the current position of the vehicle to the destination and must send the result of route search to the on-board car navigation device. If a vehicle deviates from the currently-travelling route, the on-board car navigation device of Patent Document 1 must conduct a process of obtaining new route information from the traffic information center since the on-board car navigation device of Patent Document 1 does not have a route-search function. As a counter measure for this case, Japanese Patent Laid-open Publication No. 2001-147132 (hereinafter called Patent Document 2) discloses a navigation system in which the traffic information center conducts route search every time it receives a request for new route search from the vehicle.

In the navigation system disclosed in Patent Document 2, the traffic information center updates a route for guiding a vehicle to the destination and sends the updated route information to the on-board car navigation system every time the traffic information center receives a request from the on-board car navigation device. Therefore, the system can guide a vehicle to the destination by using a new navigation route even if the vehicle deviates from the currently-travelling route. In addition, in order to continue navigation even if an updated route information cannot be obtained from the traffic information center because or bad wireless communication, the on-board car navigation device is configured to accumulate previously received route information and to use the accumulated information when determining that the wireless communication is disconnected.

However, in one problem, communication cost tends to increase in the navigation system disclosed in Patent Document 2 because the traffic information center updates a navigation route and sends the updated information on the navigation route to the on-board car navigation system every time the traffic information center receives a request from the on-board car navigation device. In another problem, if the traffic information center fails to transmit information of updated route to the on-board car navigation device repeatedly, navigation cannot be continued sometimes because the current position of the vehicle becomes distant from the position indicated by the last information received from the traffic information center.

In US 6 381 535 B1, a system to be used as an aid in navigation comprising a mobile terminal connected to a centralized server is described. Itinerary requests of the mobile terminal are transmitted to a centralized server by a radio relay link and by the fact that the server, which contains the necessary cacographic and program data, calculates the itinerary request and transmits to the mobile terminal the data concerning the straight line and arc segments that constitute the itinerary thereby permitting real time guidance.

In EP 1 035 403 A1, a method of determining a minimum-cost route from a start location to a target location within a traffic network is described. The method comprises choosing at least one entrance station of a transportation network to be used whose straight-line distance as measured from the start location falls within a predetermined range and at least one exit station on the transportation network whose straight-line distance as measured from the target location falls within the predetermined range.

In EP 1 508 778 A1, a server device, an in-vehicle terminal device and program of communication-based car navigation system is described. An in-vehicle terminal device can locate a new guidance route and display the same without receiving another guidance route delivered from a server device.

## SUMMARY OF THE INVENTION

The present invention was made in consideration of the aforementioned circumstances. It is an object of the present invention to provide a navigation device, a route-search server, and a route-search system which can navigate a vehicle by analyzing the latest information sent from a route-search server for preventing increase in communication cost between the on-board car navigation device sending requests for updating a navigation route and the traffic information center sending back the updated information on the navigation route many times.

To solve the mentioned problems, the features of the independent claim are suggested. Further, preferred developments are in the dependent claims.

That is, since the user of the navigation device can continue to use information on the route searched by the server device having the latest information even if the vehicle is at a position deviated from the navigation route, the user will not be disturbed by unstable communication between the server device and the navigation device which may be caused by temporary radiowaves interference. Therefore, the present invention can improve the reliability in communication between the server device and the navigation device.

In addition, the present invention can reduce the quantity of information transmitted from the server device to the navigation device since a preparatory route which satisfies the travelling cost condition for reaching a destination is searched.

The present information can provide a navigation device, a route-search server, and a route-search system which can navigate a vehicle by analyzing the latest information sent from a route-search server for preventing increase in communication cost between the on-board car navigation device sending requests for updating information on the navigation route and the traffic information center sending back the updated information on the navigation route many times.

## BRIEF DESCRIPTION OF THE DRAWINGS

FIG. 1 is a function block diagram of a route-search system according to one embodiment of the present invention.
FIG. 2 is a flowchart showing operations of the route-search system according to the embodiment of the present invention.
FIG. 3 is a flowchart showing a process, performed by a preparatory-route-searching unit of a server device, of setting a preparatory-route-provided area.
FIG. 4 shows an area in which a preparatory-route-provided area according to the present embodiment.
FIG. 5 is a flowchart showing another process, performed by the preparatory-route-searching unit of the server device, of setting a preparatory-route-provided area.
FIG. 6 shows a concept of distribution rate used in the process of setting an area in which a preparatory-route-provided area according to the present embodiment.
FIG. 7 shows another example of an area in which a preparatory-route-provided area according to the present embodiment.
FIG. 8 is a flowchart showing a process, performed by the preparatory-route-searching unit of the server device, of setting a travelling cost condition.
FIG. 9 shows a method of setting a travelling cost condition according to the present embodiment.
FIG. 10 is a flowchart showing a process of setting a preparatory route performed by the preparatory-route-searching unit of the server device.
FIG. 11 shows a method of setting a preparatory route according to the present embodiment.
FIG. 12 is a flowchart showing a process of setting a navigation route performed by a navigation control section of the navigation device based on preparatory route information.

FIG. 13 is a flowchart showing a process of setting a navigation route performed by a navigation control section of the navigation device based on preparatory route information. FIG. 13 shows an area in which a navigation route is provided based on the preparatory route information sent by the navigation device according to the present embodiment.

FIG. 14 is a flowchart showing a process, performed by the navigation device according to the present embodiment, of searching a navigation route and a preparatory route by obtaining information associated with a group of route points from the server device.

FIG. 15 shows the navigation route and the preparatory route generated by the route-search system using the group of route points.

Fig. 16 shows a process of dividing a preparatory route into a plurality of preparatory sub-routes in one embodiment of the present invention.

Fig. 17 shows a plurality of divided preparatory sub-routes.

Fig. 18 shows a process of determining whether the vehicle gets out of a preparatory-route-provided area.

Fig. 19 shows areas including a preparatory route and controlled by means of a plurality of unit meshes.

DESCRIPTION OF THE PREFERRED EMBODIMENTS

An embodiment of the present information will be explained in details with reference to the accompanying drawings.

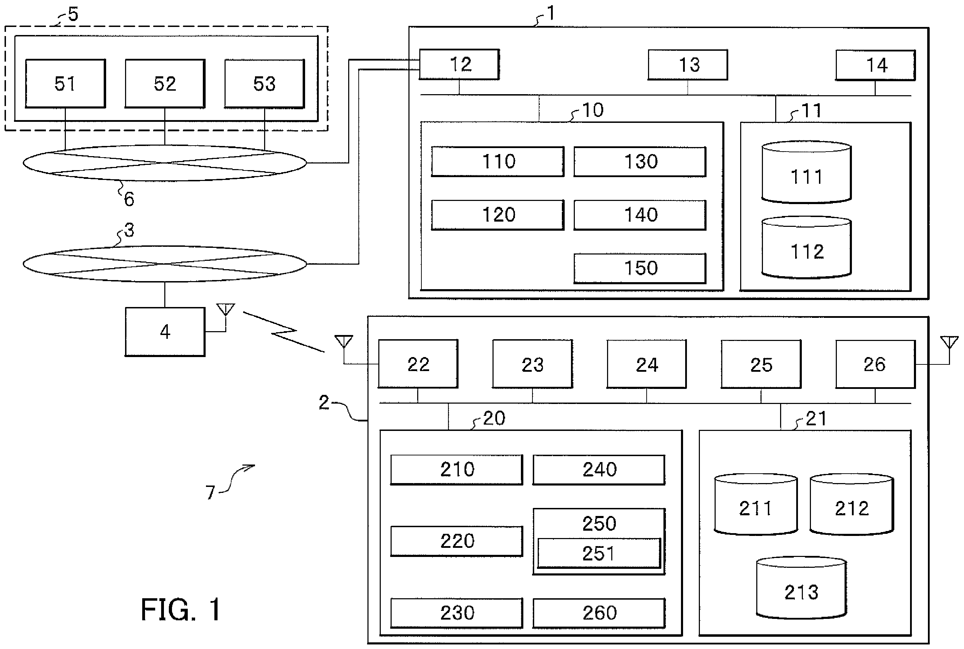

FIG. 1 is a function block diagram of a route-search system 7 according to one embodiment of the present invention.

As shown in FIG. 1, the route-search system 7 of the present embodiment includes a server device 1 and a navigation device 2. Both the server device 1 and the navigation device 2 are connected to a communication network 3. The server device 1 is connected to the navigation device 2 via a base station 4 by wireless communication. The server device 1 is connected to an externally-located information center 5 via a broadband network 6.

As shown in FIG. 1, the server device 1 includes a controller section 10, an auxiliary storage section 11, a communication section 12, a memory section 13, and an input/output section 14..

The controller section 10 has a function of searching a route by using a master map database 111 stored in the auxiliary storage section 11, which will be explained later, when the controller section 10 receives a request from the navigation device 2. The controller section 10 includes an external information acquisition section 110, a route-request-processing section 120, a navigation-route-search section 130, a preparatory-route-search section 140, and a route information transmitter section 150. It should be noted that, a central processing unit (CPU) carries out functions of the controller section 10 by executing programs loaded on the memory section 13 from the auxiliary storage section 11.

The external information acquisition section 110 obtains various information on congestion, climate, and equipment etc. from the externally-located information center 5, and stores the obtained information in the external information database 112 included in the auxiliary storage section 11.

The externally-located information center 5 includes a traffic information center 51, a weather information center 52, and a tourist information center 53 etc. The externally-located information center 5 transmits to the server device 1 via the broadband network 6 information on current traffic condition, estimated traffic condition, accident or disaster, traffic regulation, and tourism (e.g. favorite points, business hour of tourist equipment etc.).

The route-request-processing section 120 receives the route-request information transmitted from the navigation device 2, and analyzes the request. Then, the route-request-processing section 120 informs the navigation-route-search section 130 of the result of the analysis. The route-request information obtained from the navigation device 2 relates to information indispensable for route search, and includes a current position (or a departure point), a destination, planned date and time, and other conditions used for route search. The route-request information further includes a request of searching a preparatory route which will be used when a vehicle deviates from a navigation route.

In the search condition, it is determined as to whether a high priority is given to toll roads, whether a high priority is given to a time-saving route or a distance-saving route, and whether route search considers traffic condition. An ambiguous condition regarding e.g. tourist favorite routes and recommended routes can be included in the search condition. In this case, the route-request-processing section 120 conducts a process of converting such ambiguous condition to a more concrete condition.

For example, the route-request-processing section 120 converts a term "favorite route" to a "congesting road" and converts a term "recommended route" to "road including route points which attract a user's attention" which can be retrieved more concretely, and then the route-request-processing section 120 creates an index key from each converted term. If the external information database 112 does not find information including the created index key, or if the server device 1 needs the latest information, the external information acquisition section 110 included in the controller section 10 of the server device 1 obtains necessary information from the externally-located information center 5, and then the server device 1 stores the obtained information in the external information database 112.

The external information acquisition section 110 obtains information on traffic condition and climate etc., which varies in a relatively short period and is used frequently as a route search condition, from the externally-located information center 5 periodically. The server device 1 stores the collected information in the external information database 112 to update the stored information continually.

The navigation-route-search section 130 receives the request analyzed by the route-request-processing section 120, and refers to the master map database 111 and refers to the external information database 112 storing the latest information necessary for conducting a route search operation. Subsequently, the navigation-route-search section 130 searches a route connecting the departure point to the destination.

For example, a route-search algorithm used by the navigation-route-search section 130 may be Dijkstra's algorithm in which cost (e.g. distance) becomes minimum between a departure point and a destination.

The preparatory-route-search section 140 searches a preparatory route in addition to the route searched by the navigation-route-search section 130 if a request of searching a preparatory route is included in the route-request information obtained by the route-request-processing section 120. For example, the preparatory-route-search section 140 searches a preparatory route starting from a node (intersection) in the vicinity of the navigation route and ending at the destination.

The route information transmitter section 150 creates route information including the navigation route searched by the navigation-route-search section 130 and the preparatory route searched by the preparatory-route-search section 140, and then transmits the created route information to the navigation device 2 via the communication section 12 and the communication network 3.

The auxiliary storage section 11 is a storage unit such as a hard disk drive unit or a flash memory device etc. The auxiliary storage section 11 includes a master map database 111, an external information database 112, and programs (not shown in the drawings) for controlling the controller section 10.

The master map database 111 stores the latest roadmap data as master roadmap data which are necessary for navigating a vehicle.

The external information database 112 stores therein the information on congestion condition, climate, and tourism, which is obtained by the external information acquisition section 110 from the externally-located information center 5 via the broadband network 6 and the communication section 12.

The communication section 12 receives the route-request information transmitted from the navigation device 2 via the communication network 3, and also receives information transmitted from the externally-located information center 5 via the broadband network 6. In addition, the communication section 12 transmits the route information created by the route information transmitter section 150 to the navigation device 2.

The memory section 13 is a random access memory (RAM) or a cache memory etc. for temporarily storing therein roadmap information retrieved from the master map database 111 stored in the auxiliary storage section 11. The memory section 13 also stores information obtained by the communication section 12.

The input/output section 14 includes a keyboard or a touch panel etc. for manually inputting instructions to be sent to the server device 1. In addition, the input/output section 14 puts out the result of operation conducted by the controller section 10 to a display unit such as a liquid display device etc.

The navigation device 2 will be explained next. The navigation device 2 is connected to the server device 1 via the communication network 3. The navigation device 2 receives route information and preparatory route information from the server device 1. The preparatory route information will be explained later.

The navigation device 2 includes a navigation controller section 20, an auxiliary storage section 21, a communication section 22, a memory section 23, an input/output section 24, a display section 25, and a satellite-radiowave receiver section 26.

The navigation controller section 20 performs a navigation process based on the route information obtained from the server device 1 via the communication section 22. If a vehicle deviates from the navigation route, the navigation controller section 20 navigates the vehicle on the preparatory route obtained previously from the server device 1. The navigation controller section 20 includes a position information acquisition section 210, a search-condition-setting section 220, a route-request-transmitter section 230, a route information acquisition section 240, a route-search section 250, and a navigation controller section 260. It should be noted that, for example, a central processing unit (CPU) carries out the function of the navigation controller section 20 by executing programs loaded on the memory section 23 from the auxiliary storage section 21 included in the navigation device 2.

The position information acquisition section 210 obtains information which the satellite-radiowave receiver section 26 receives from a satellite, and then, the position information acquisition section 210 calculates the current position of the vehicle having navigation device 2 aboard.

If a user of the navigation device 2 inputs information into the navigation device 2 by using the input/output section 24, the information is sent to the search-condition-setting section 220. The information herein is necessary for navigation and relates to whether a high priority is given to a time-saving route or a distance-saving route, whether a high priority is given to toll roads, and whether route search considers traffic condition. The information on whether the search-condition-setting section 220 obtains a preparatory route from the server device 1 in advance when the vehicle deviates from the navigation route is set via the input/output section 24. It should be noted that, a departure-point-setting unit and a destination-setting unit recited in claims correspond to the search-condition-setting section 220 according to the present embodiment.

The route-request-transmitter section 230 creates the route-request information, and then, the communication section 22 transmits the created route-request information to the server device 1. The route-request information herein includes a current position of the navigated vehicle obtained by the position information acquisition section 210; a destination, scheduled date and time, other route search conditions set by the search-condition-setting section 220; and a request of searching a preparatory route requested by the user.

The route information acquisition section 240 obtains the route information transmitted from the server device 1 via the communication section 22. The route information acquisition section 240 extracts information on a navigation route from the route information, and the information on the extracted route is stored as navigation route information 211 in the auxiliary storage section 21. The route information acquisition section 240 extracts information regarding a preparatory route from the route information, and information on the extracted preparatory route is stored as preparatory route information 212 in the auxiliary storage section 21.

If the navigation device 2 has not obtained the navigation route information 211 from the server device 1, the route-search section 250 searches a route to the destination based on the information stored in the map database 213 included in the auxiliary storage section 21, the information inputted by the user via the input/output section 24, and the information of the current position of the vehicle obtained from the position information acquisition section 210.

The route-search section 250 includes a supplementary-route-search section 251. If the vehicle deviates from the navigation route during navigation, the supplementary-route-search section 251 searches a supplementary route between the current position of the vehicle and the preparatory route obtained in advance from the server device 1, or searches another supplementary route between the current position of the vehicle and the previously navigation route from which the vehicle deviated. The supplementary-route-search section 251 selects a node that is the closest to the current position of the vehicle among nodes included in the route (a navigation route or a preparatory route) obtained from the server device 1, and then sets the route reaching the selected node as a supplementary route.

The navigation controller section 260 navigates the vehicle based on the navigation route information 211 stored in the auxiliary storage section 21 and based on the information of the current position of the vehicle obtained from the position information acquisition section 210. If the vehicle deviates from the navigation route during navigation, the navigation controller section 260 navigates the vehicle to the preparatory route based on the supplementary route searched by the supplementary-route-search section 251. After the vehicle reaches the preparatory route, the navigation controller section 260 navigates the vehicle to the destination based on the preparatory-route information 212 stored in the auxiliary storage section 21. It should be noted that, the navigation controller section 260 according to the present embodiment includes a route-selecting unit, a deviation-determining unit, and a rerouting unit. The route-selecting unit includes the deviation-determining unit and the rerouting unit described in the claims.

If the navigation device 2 has not obtained the navigation route information 211 and the preparatory-route information 212 from the server device 1, the navigation controller section 260 navigates the vehicle on a route searched by the route-search section 250 using the map database 213 included in the auxiliary storage section 21.

The auxiliary storage section 21 is a storage unit such as a hard disk drive unit or a flash memory device etc. The auxiliary storage section 21 includes a navigation route information 211, a preparatory-route information 212, a map database 213, and programs (not shown in the drawings) for controlling the navigation controller section 20.

The route information acquisition section 240 conducts a process of extracting a navigation route from the route information obtained from the server device 1. The extracted information on the navigation route is stored in the auxiliary storage section 21 as the navigation route information 211.

The route information acquisition section 240 conducts a process of extracting a preparatory route from the route information obtained from the server device 1. The extracted information on the preparatory route is stored in the auxiliary storage section 21 as the preparatory-route information 212.

Roadmap data which are necessary for navigation are stored in the map database 213.

In the present embodiment, the roadmap data includes roadmap data, destination-search terms data, background image data, and navigation data. The destination-search terms data are used for searching a destination by using a search term such as equipment name or telephone number. The background image data are used for providing a background image displayed on a screen of the display section 25. The navigation data are used for instructing a user (e.g. a driver) as to which direction to turn the car at an intersection, and as to which lane to travel on a road.

The roadmap data are used for displaying a road on a screen of a display device and for calculating a recommended route to a destination by using, for example, Dijkstra's algorithm. In the roadmap data, a network of roads are described as a group of sequentially connected sub-links called road links. The roadmap data include information on coordinates of the road links, an order of sequentially connecting the road links, and cost including time or distance required for going through a road link. In addition, the roadmap data include node information on the position of each node (e.g. an intersection) included in the road links.

The communication section 22 transmits the route-request information created by the route-request-transmitter section 230 to the server device 1 via the communication network 3. In addition, the communication section 22 receives the route information transmitted from the server device 1, and then transmits the received route information to the route information acquisition section 240 included in the navigation controller section 20.

The memory section 23 is a random access memory (RAM) etc. The navigation controller section 20 controls the memory section 23 for temporarily storing therein information extracted from the navigation route information 211 or the preparatory-route information 212 stored in the auxiliary storage section 21. The navigation controller section 20 controls the memory section 23 for temporarily storing therein information obtained by the communication section 22.

The input/output section 24 includes a remote-control device or a touch panel etc. for inputting instructions which are to be sent to the navigation device 2 from outside. The navigation controller section 20 controls the input/output section 24 to put out various sound message obtained through various processing conducted by the navigation device 2 by using a speaker unit, which is not shown in the drawings.

The display section 25 has a liquid display device etc. The display section 25 displays road condition and various navigation messages on its screen in accordance with the result of various navigation control processes conducted by the navigation controller section 20.

The satellite-radiowave receiver section 26 receives radiowaves which are sent from satellites and are used for calculating the current position of the on-board navigation device 2. The satellite-radiowave receiver section 26 specifies the positions of satellites and also measures the distance between the navigation device 2 having the satellite-radiowave receiver section 26 and each satellite by analyzing the received radiowave. The current position of the on-board navigation device 2 can be determined accurately by using radiowaves sent from at least four satellites.

In the embodiment shown in FIG. 1, the server device 1 analyzes the content of the latest information obtained from the externally-located information center 5 to search a route, and then transmits the navigation route to the navigation device 2. In contrast, in a conventional traffic information service, a navigation device receives the latest information from the externally-located information center 5 and analyzes the content of the received information, and then searches a route based on the analyzed content. However, the conventional traffic information service has a problem with an increase in communication cost because, as the amount of content included in the information transmitted to the navigation device 2 increases, the chargeable time and the resulting communication cost increases if a greater amount of content is processed by the server device 1 and if the content is updated more frequently in order to improve traffic information service. The configuration of the present invention as shown in FIG. 1 can prevent the communication cost from increasing because the server device 1 conducts route search, and accordingly, the amount of data sent to and processed by the navigation device 2 can be minimized.

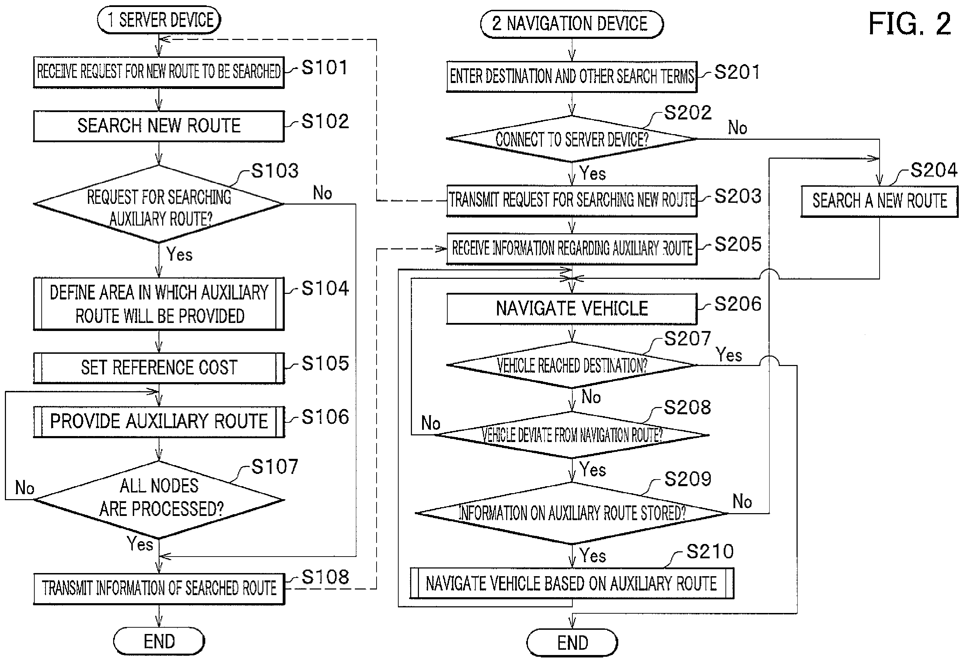

The operation conducted by the route-search system 7 according to the present embodiment will be explained next with reference to FIGS. 1 and 2.

FIG. 2 is a flowchart showing operations of the route-search system 7 according to the present embodiment of the present invention.

In a step S201, a user (or a driver of a vehicle) inputs information on a destination and search conditions into the navigation device 2 by using the input/output section 24, and then, the search-condition-setting section 220 included in the navigation controller section 20 receives the input search condition.

In a step S202, the search-condition-setting section 220 determines whether to cause the route-search section 250 included in the navigation device 2 to search a route by using information stored in the map database 213 included in the auxiliary storage section 21, or to cause the navigation device 2 to connect to the server device 1 for asking to send a request of route search. The user may set a timing of the determination when the user starts a route search operation. Alternatively, the user may set the timing in advance. In both cases, the user can use the input/output section 24 to input necessary information by means of a setting window displayed on the display section 25.

If the search-condition-setting section 220 determines not to request that the server device 1 should be connected to the navigation device 2 (No from the step S202), the operation proceeds to a step S204, and the route-search section 250 included in the navigation device 2 searches a route to the input destination.

If the search-condition-setting section 220 determines to request that the server device 1 should be connected to the navigation device 2 (Yes from step S202), the operation proceeds to a step S203, and the route-request-transmitter section 230 transmits the route-request information to the server device 1. The route-request information includes the destination, search conditions, and the current position etc. received by the search-condition-setting section 220.

In a step S101, the route-request-processing section 120 included in the controller section 10 in the server device 1 receives the route-request information from the navigation device 2 via the communication section 12.

In a step S102, the navigation-route-search section 130 receives the current position (or a departure point), destination, and search conditions included in the route-request information from the route-request-processing section 120, and then, the navigation-route-search section 130 searches a route to the destination.

In a step S103, the route-request-processing section 120 determines whether a request of searching a preparatory route is included in the route-request information.

The user may set a timing of sending a request for searching a preparatory route when the user starts a route search operation. Alternatively, the user may set the timing in advance. In both cases, the user can use the input/output section 24 to input necessary information by means of a setting window displayed on the display section 25.

If the route-request-processing section 120 determines that a request of searching a preparatory route is not included in the route-request information (No from step S103), the operation proceeds to a step S108. If the route-request-processing section 120 determines that a request of searching a preparatory route is included in the route-request information (Yes from step S103), the operation proceeds to a step S104 for conducting a process of setting an area in which a preparatory route should be provided. Hereafter, this area is called preparatory-route-provided area

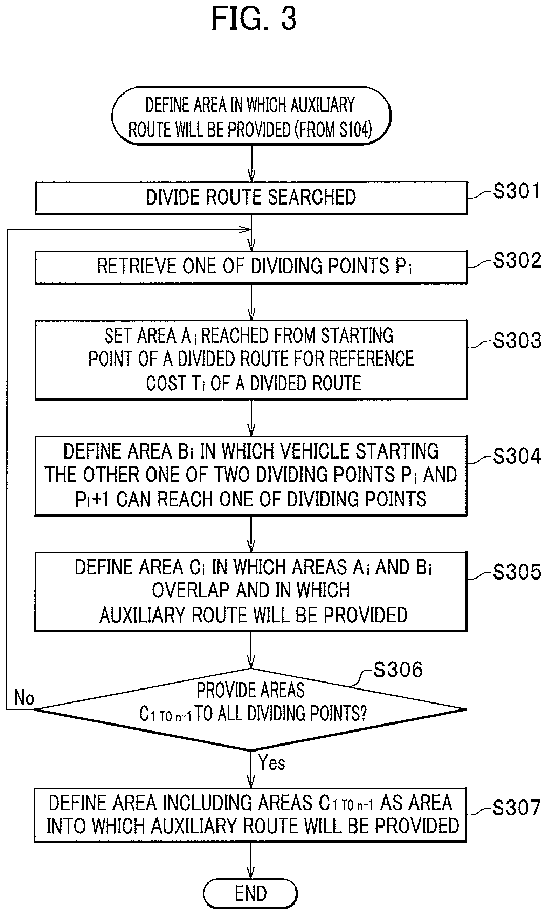

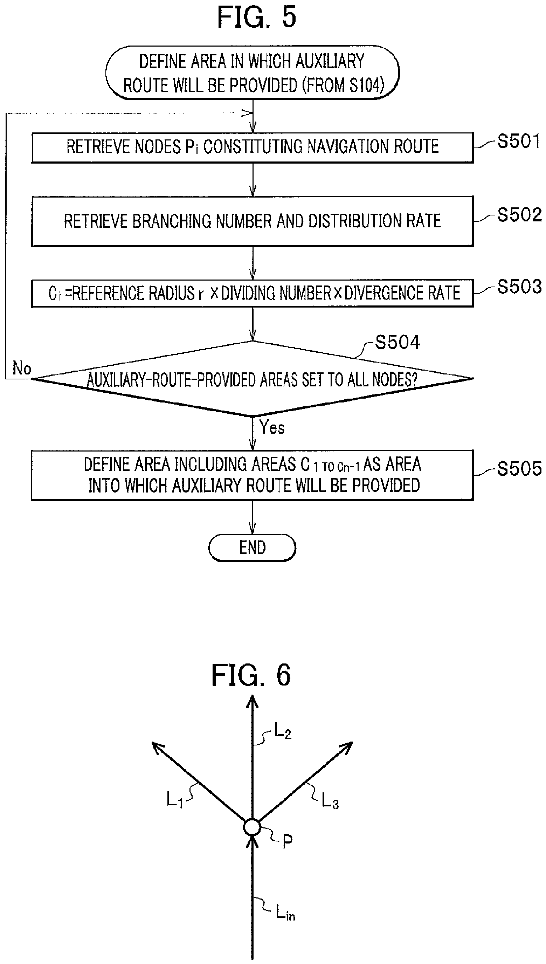

In a step S104, the preparatory-route-search section 140 defines a preparatory-route-provided area in the vicinity of the navigation route (see FIGS. 3 and 5 for detail).

Reasons for defining a preparatory-route-provided area are as follows. If a plurality of navigation system users request route search at a time, the server device 1 inevitably takes a longer time to respond to these users because load increases temporarily in the server device 1. As a matter of course, the information on the result of route search should be returned to the users as quickly as possible. Taking it into account that the positions of the vehicles of these users continue to change while they are waiting for responses from the server device 1, the amount of calculation for searching a preparatory route should be minimized, and the time which is necessary for returning responses to the users must be maintained within a predetermined time. To address this, minimizing an area in which a preparatory route is searched is effective for reducing the amount of calculation. A few methods are conceivable for defining a preparatory-route-provided area. In one method, an area is defined along a navigation route and within a predetermined distance from the navigation route. In another method, an area is defined as a mesh area including a navigation route. In the present embodiment, an area is defined by using the cost of the navigation route.

In the present embodiment, distance, travelling time, expense (e.g. fuel, toll, labor), or the amount of $CO_2$ emission can be set for the cost obtained between predetermined two points of the navigation route. The present embodiment will be explained by using the distance between predetermined two points of the navigation route for determining a cost of the navigation route. That is, in the present embodiment, the cost decreases if the distance is short between predetermined two points of a navigation route; and a cost increases if the distance is long between predetermined two points of the navigation route. In the following explanation, the cost necessary to travel from a starting point to an ending point is called travelling cost.

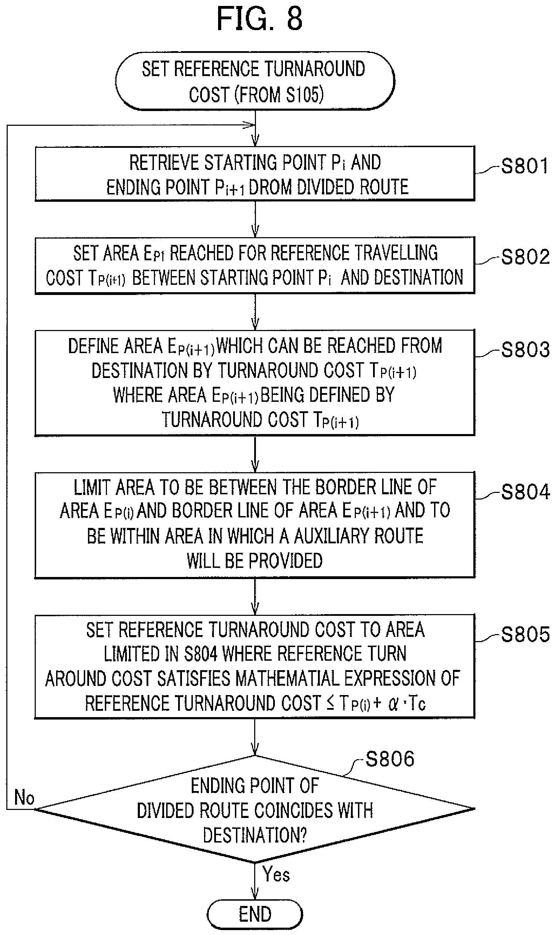

In a step S105, the preparatory-route-search section 140 conducts a process of setting a condition of travelling cost used for determining a preparatory route. The present invention can set a preparatory route which satisfies a condition that a travelling cost of a preparatory route must be within a predetermined reference value since the preparatory-route-search section 140 conducts this process. Hereafter, this condition will be called a travelling cost condition. That is, the present invention eliminates a candidate for a preparatory route if a candidate of a preparatory route has cost equal to or greater than a predetermined distance or time etc. Details of the process of setting a condition for a travelling cost used for determining a preparatory route is explained later with reference to FIG. 8.

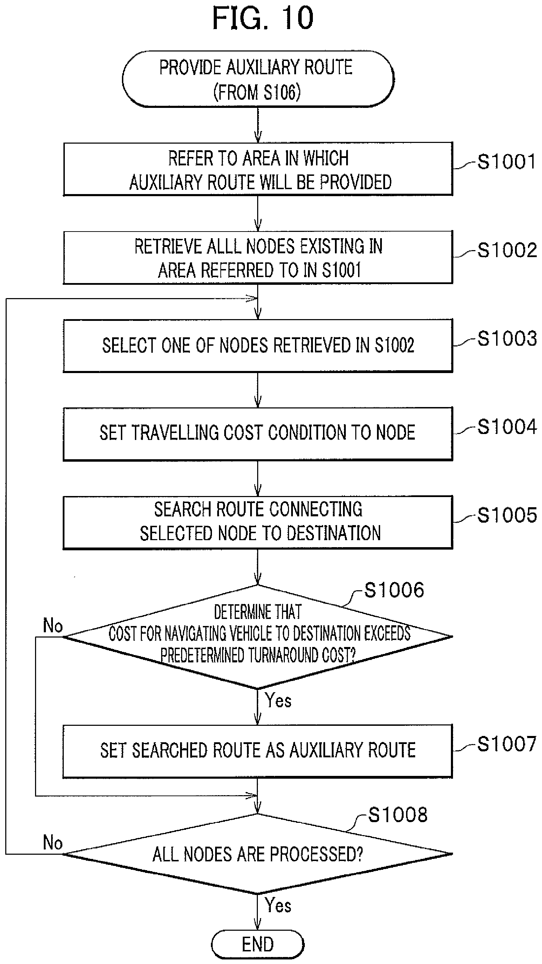

In a step S106, the preparatory-route-search section 140 conducts a process of providing a preparatory-route-provided area defined in the step S104 with respect to nodes which satisfy the travelling cost condition set in the step S105. Details of the process of setting a condition used for providing a preparatory route is explained later with reference to FIG. 10.

In a step S107, the preparatory-route-search section 140 determines whether all the nodes in the preparatory-route-provided area were processed. If the preparatory-route-search section 140 determines that all the nodes in the preparatory-route-provided area were not processed (No from step S107), the operation returns to the step S106. If the preparatory-route-search section 140 determines that all the nodes in the preparatory-route-provided area were processed (Yes from step S107), the operation returns to a step S108.

In the step S108, the route information transmitter section 150 transmits information to the navigation device 2, wherein the transmitted information includes the route searched by the navigation-route-search section 130 and the preparatory route searched by the preparatory-route-search section 140.

In a step S205, the route information acquisition section 240 included in the navigation device 2 obtains information from the communication section 22 wherein the information obtained from the server device 1 includes the navigation route and the preparatory route.

In a step S206, the navigation controller section 260 navigates a vehicle by using the information on the navigation route in the step S204 or S205, and also by using information on the current position of the vehicle obtained from the position information acquisition section 210.

In a step S207, the navigation controller section 260 determines whether the current position of the vehicle has reached the destination. If the navigation controller section 260 determines that the current position of the vehicle has reached the destination (Yes from step S207), the navigation controller section 260 finishes the operation. If the navigation controller section 260 determines that the current position of the vehicle has not reached the destination (No from step S207), the operation proceeds to a step S208. In the step S208, the navigation controller section 260 determines whether the current position of the vehicle deviates from the navigation route.

If the navigation controller section 260 determines that the current position of the vehicle does not deviate from the navigation route (No from step S208), the operation returns to the step S206, and the navigation controller section 260 continues to navigate the vehicle. If the navigation controller section 260 determines that the current position of the vehicle has deviated from the navigation route (Yes from step S208), the operation proceeds to a step S209.

In the step S209, the navigation controller section 260 determines whether information on a preparatory route which corresponds to the navigation route is included in the preparatory-route information 212 stored in the auxiliary storage section 21. If the navigation controller section 260 determines that information on the preparatory route is not included in the preparatory-route information 212, the navigation operation returns to the step S204. In the step S204, the route-search section 250 navigates the vehicle by using information stored in the map database 213 included in the auxiliary storage section 21.

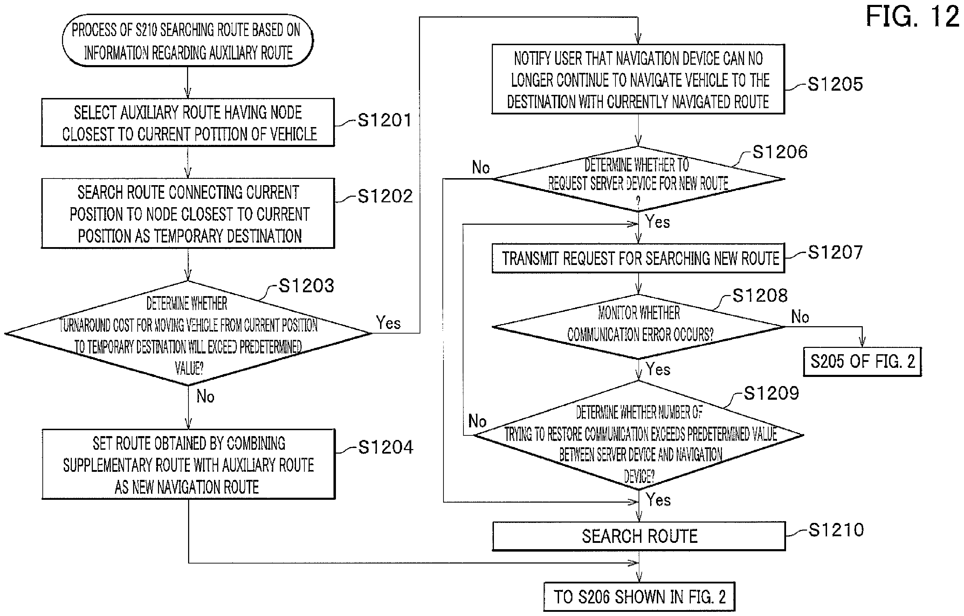

If the navigation controller section 260 determines that information on the preparatory route is included in the preparatory-route information 212, the navigation operation proceeds to a step S210. In the step S210, the navigation controller section 260 searches a new route connecting the current position of the vehicle to the destination by using the information on the preparatory route. The process of searching a new route by using the information on the preparatory route is explained later in detail with reference to FIG. 12.

Subsequently, the navigation operation returns to the step S206, and the navigation controller section 260 continues to navigate the vehicle on the route searched by using the preparatory route.

The above explained navigation operation is based on a precondition that the server device 1 transmits information on a navigation route and a preparatory route to the navigation device 2 in response to a request sent from the navigation device 2. Alternatively, a user planning travel at home, or even not at home, may use a personal computer or a mobile phone instead of using the navigation device 2 attached to a vehicle to request the server device 1 for a route to a destination. In this case, the server device 1 may have a memory device for storing a navigation route therein temporarily so that the route temporarily stored in the server device 1 will be transmitted to a terminal device such as a personal computer or a mobile phone if the terminal device sends information on the itinerary to the server device 1 and requests route search.

In the present embodiment, a current position of a vehicle has been explained as a departure point. However, in the present invention, the navigation device 2 may set a point as a departure point, which a user inputs into the input/output section 24 etc.

Hereafter, the step S104 of defining a preparatory-route-provided area is explained.

(Embodiment 1 for defining a preparatory-route-provided area)

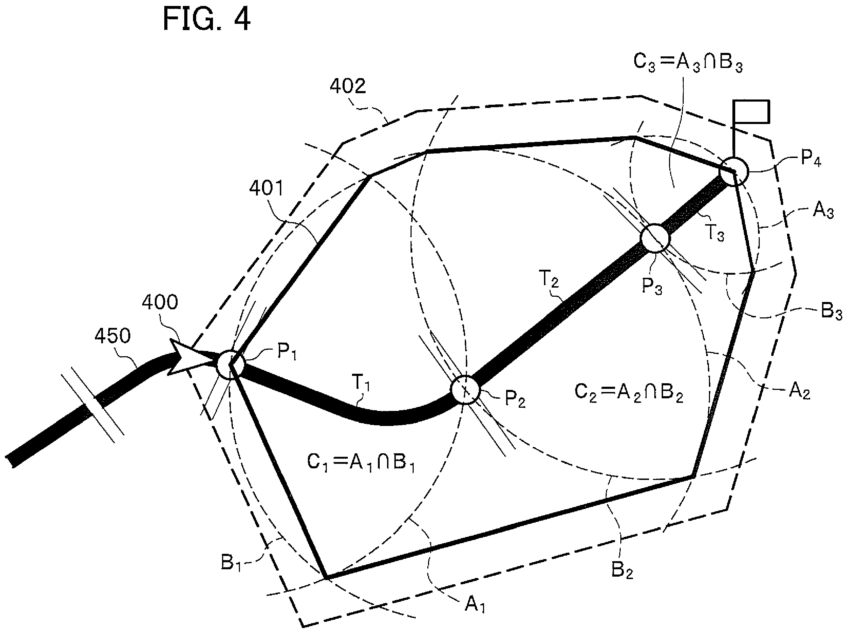

FIG. 3 is a flowchart showing a process, performed by the preparatory-route-search section 140 included in the server device 1, of defining a preparatory-route-provided area. FIG. 4 shows a preparatory-route-provided area in accordance with the present embodiment.

At first, in a step S301, the preparatory-route-search section 140 divides the route searched in the step S102 shown in FIG. 2, and then, in a step S302, the preparatory-route-search section 140 retrieves one of the points dividing the route from the master map database 111 included in the auxiliary storage section 11. In the present embodiment, branching points $P_i$ (i is an integer) used for dividing a navigation route are nodes (intersections) included in the navigation route. In addition, nodes in the vicinity of the navigation route, meshes, or demarcation points of an administrative district may be used as branching points $P_i$ if they can divide the navigation route. The branching points $P_i$ (i=1 to n-1) are nodes $P_2$ and $P_3$ on the route (reference numeral 450) in an example shown in FIG. 4.

In a step S303, the preparatory-route-search section 140 sets the cost $T_i$ of the divided route as a reference cost, and then, defines areas $A_i$ (i is an integer). In the example of FIG. 4, a vehicle move from the starting point $P_1$ to the next branching point $P_2$ in the area $A_1$, and move from the starting point $P_2$ to the next branching point $P_3$ in the area $A_2$ by the same cost.

In the example shown in FIG. 4, in the first divided route, the node $P_1$ indicates the current position of a vehicle and this point is the starting point of the navigation route. In the first divided route, the node $P_2$ is the ending point. The preparatory-route-search section 140 sets the cost $T_1$ for a vehicle to move from the node $P_1$ to the node $P_2$ as the reference cost. The preparatory-route-search section 140 defines the area $A_1$ within which a vehicle can move to the node $P_2$ for the reference cost $T_1$.

In a step S304, the preparatory-route-search section 140 defines an area $B_i$ within which the vehicle can move back from the node $P_n$ to the node $P_{n-1}$ by the same reference cost $T_i$.

In the example shown in FIG. 4, the area $B_i$ is an area $B_1$ within which the vehicle can move back from the node $P_2$ to the node $P_1$ by the same reference cost $T_1$.

In a step S305, the preparatory-route-search section 140 defines an area, in which the area $A_i$ and the area $B_i$

overlap, as an area in which a divided route is provided.

In the example shown in FIG. 4, the preparatory-route-search section 140 defines an area $C_1$, in which the area $A_1$ and the area $B_1$ overlap, as a preparatory-route-provided area. The area $B_i$ is an area $B_1$ within which the vehicle can move back from the node $P_2$ to the node $P_1$ for the same travelling cost $T_1$.

In a step S306, the preparatory-route-search section 140 determines whether an area $C_i$ is provided for each divided route. If the preparatory-route-search section 140 determines that the area $C_i$ has been provided for each divided route (Yes from step S306), the operation proceeds to a step S307. If the preparatory-route-search section 140 determines that the area $C_i$ has not been provided for each divided route (No from step S306), the operation returns to the step S302.

In a step S307, the preparatory-route-search section 140 sets an area including all the areas $C_1$ to $C_{n-1}$ as a preparatory-route-provided area.

In the example shown in FIG. 4, the preparatory-route-search section 140 repeats the steps from S302 to S305 to define the preparatory-route-provided area $C_2$ obtained based on the reference cost $T_2$ for the length of the divided route $P_2$ - $P_3$, and also defines the preparatory-route-provided area $C_3$ obtained based on the reference cost $T_3$ for the length of the divided route between $P_3$ and $P_4$, and then, the preparatory-route-search section 140 defines an area which includes all the divided routes searched for navigating the vehicle from the starting point $P_1$ to the destination $P_4$. The preparatory-route-search section 140 sets the area including the defined areas $C_1$ to $C_3$ as a preparatory-route-provided area 401 in which a preparatory route is provided in the vicinity of the navigation route between $P_1$ and $P_4$. The preparatory-route-search section 140 may define an area 402 which is indicated by a broken line and included a margin provided around the area 401.

The preparatory-route-search section 140 defines the preparatory-route-provided area as explained above.

(Embodiment 2 for defining a preparatory-route-provided area)

FIG. 5 is a flowchart showing another process, performed by the preparatory-route-search section 140 of the server device 1, of setting a preparatory-route-provided area.

At first, in a step S501, the preparatory-route-search section 140 retrieves one of the nodes (intersections) $P_i$ (i=1 to n, and i is an integer) as a branching point which is included in the navigation route searched in the step S102 shown in FIG. 2, from the master map database 111 included in the auxiliary storage section 11.

In a step S502, the preparatory-route-search section 140 extracts the number of routes branching from the route (hereinafter called branch number) and the distribution rate thereof from the information on the retrieved nodes (intersections).

The branch number may be the number of road links branching from one node. However, in the present embodiment, the number of routes dividing from a branching point is defined as the number of road links. In the present embodiment, the number of routes do not include an in-coming link $L_{in}$ shown in FIG. 6.

The distribution rate is an index which becomes larger if a greater number of in-coming vehicles etc. is distributed into a plurality of road links than the number of in-coming vehicles distributed into a road link.

FIG. 6 shows a concept of distribution rate used in the process of setting a preparatory-route-provided area according to the present embodiment.

FIG. 6 shows an example of road links $L_1$, $L_2$, and $L_3$ branching at a node P from a road link $L_{in}$. The road link $L_{in}$ is called an in-coming link, and the road links $L_1$ to $L_3$ are called out-going links. Herein it is assumed that, during a certain time period, 1000 vehicles have passed the road link $L_{in}$; 200 vehicles have passed the road link $L_1$; 300 vehicles have passed the road link $L_2$; and 500 vehicles have passed the road link $L_3$. The ratio of traffic amount going to the road links $L_1$, $L_2$, and $L_3$ is calculated as follows. That is, the ratio of the traffic amount going to the road links $L_1$ is obtained as 200/1000 = 0.2; the ratio of the traffic amount going to the road links $L_2$ is obtained as 300/1000 = 0.3; and the ratio of the traffic amount going to the road links $L_3$ is obtained as 500/1000 = 0.5. The values of the traffic amounts obtained above is normalized by the largest traffic amount 0.5 of the road link $L_3$. The normalized traffic amount is 0.4 in the direction of $L_1$; the normalized traffic amount is 0.6 in the direction of $L_2$; and the normalized traffic amount is 1 in the direction of $L_3$. The average of the normalized traffic amounts of 0.4 and 0.6 becomes 0.5. The normalized traffic amount of 0.5 of the direction of road link $L_3$ is omitted. In the present embodiment, the distribution rate is 0.5 at the node P having the in-coming link $L_{in}$ during the aforementioned time period. For example, in the present embodiment, the distribution rate may be calculated for each in-coming link and every one hour. Alternatively, each node may have one distribution rate obtained by averaging distribution rates calculated with respect to all the road links connecting to the node. In the example of FIG. 6, four distribution rates can be obtained since each one of four road links $L_1$, $L_2$, $L_3$, and $L_{in}$ connecting to the node P can be set as an in-coming link. In the present invention, such four distribution rates may be averaged, and the obtained average can be used as the distribution rate of each node.

It should be noted that, in the present embodiment, distribution rates and the branch numbers are stored in the master map database 111 in advance as node information. Alternatively, distribution rates may be obtained from the externally-located information center 5 and may be stored in the master map database 111. Also, the server device 1 may have a distribution rate calculation unit which calculates distribution rates based on traffic information (including traffic amount) obtained from the externally-located information center 5. In another configuration, the server device 1 may receive not only a request of route search but also data on travelling distance etc. from the navigation device 2 to calculate distribution rates based on the received information.

Explanation will be continued with reference to FIG. 5. In a step S503, the preparatory-route-search section 140 defines an area $C_i$, in which a preparatory route is provided, based on the distribution rates and the branch numbers, by using a mathematical expression (1) as follows.

$$\text{Area } C_i = \text{Reference Radii } r \times \text{Branch numbers} \times \text{Distribution Rates}$$

In the a mathematical expression (1), "reference radius r" is the diameter of an area centered at each node. For example, if the travelling velocity of a vehicle attached with the navigation device 2 is 60km/h, and if the vehicle must reach a preparatory route within 2 minutes after the vehicle deviates from a navigation route, a reference radius r will be calculated as 60km/h÷60×2=2km. In the present embodiment, distribution rates are set to have a minimum value which is equal to or greater than 0 (zero).

In a step S504, the preparatory-route-search section 140 determines whether reference radii r are set for all the areas $C_i$. If the preparatory-route-search section 140 determines that reference radii r are not set for all the areas $C_i$ (No from step S504), the operation returns to the step S501. If the preparatory-route-search section 140 determines that reference radii r are set for all the areas $C_i$ (No from step S504), the operation proceeds to a step S505.

In the step S505, the preparatory-route-search section 140 sets all the areas $C_1$ to $C_n$ as the preparatory-route-provided area.

More specifically, the preparatory-route-search section 140 defines areas $C_i$ corresponding to all the branching points, and then, the preparatory-route-search section 140 sets all the areas $C_i$ as a preparatory-route-provided area. Alternatively, the preparatory-route-search section 140 may regard an area which includes all the areas $C_i$ as a preparatory-route-provided area.

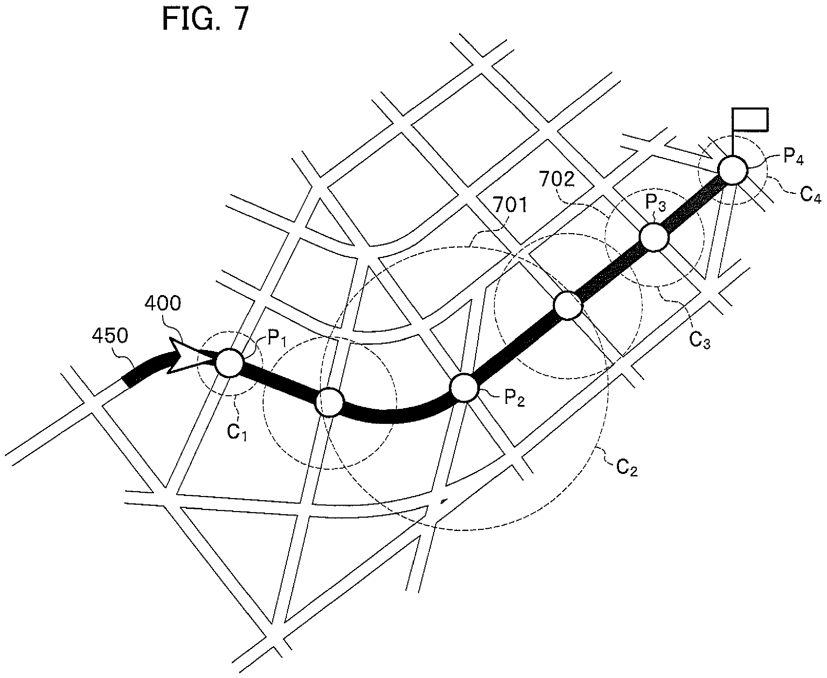

FIG. 7 shows another example of a preparatory-route-provided area in accordance with the present embodiment.

As indicated by a broken line 701 shown in FIG. 7, an area $C_2$, in which a preparatory route is provided, is set to be larger since the branch number and the distribution rate are greater at the node $P_2$. In this configuration, a preparatory route can be provided appropriately even if a vehicle has a greater risk of deviating from a navigation route at a node which is divided into various directions of road links. For example, since the node $P_3$ has a greater branch number but has a smaller distribution rate, the preparatory-route-search section 140 determines that a vehicle has a lower risk of deviating from a navigation route 450. Therefore, the preparatory-route-search section 140 defines the area $C_3$ to be smaller than the area $C_2$.

In the example shown in FIG. 7, an area, in which a preparatory route is provided, has been defined for each node constituting a navigation route without considering the branch number nor the distribution rate. In another configuration of the present invention, an area, in which a preparatory route is provided, may be defined for nodes having the greater branch number or greater distribution rate. Further alternatively, the preparatory-route-search section 140 may define areas, in which a preparatory route is provided, in the vicinity of the current position $P_1$ and in the vicinity of the destination point $P_4$ to be smaller than areas defined regarding route points $P_2$ to $P_4$, because, in the vicinity of these points $P_1$ and $P_4$, a vehicle must travel a shorter distance from the current position $P_1$ or to the destination point $P_4$, therefor, the vehicle has a lower risk of deviating from the navigation route.

(A process of setting travelling cost conditions)

Hereafter, the step S105 of setting a travelling cost shown in FIG. 2 will be explained.

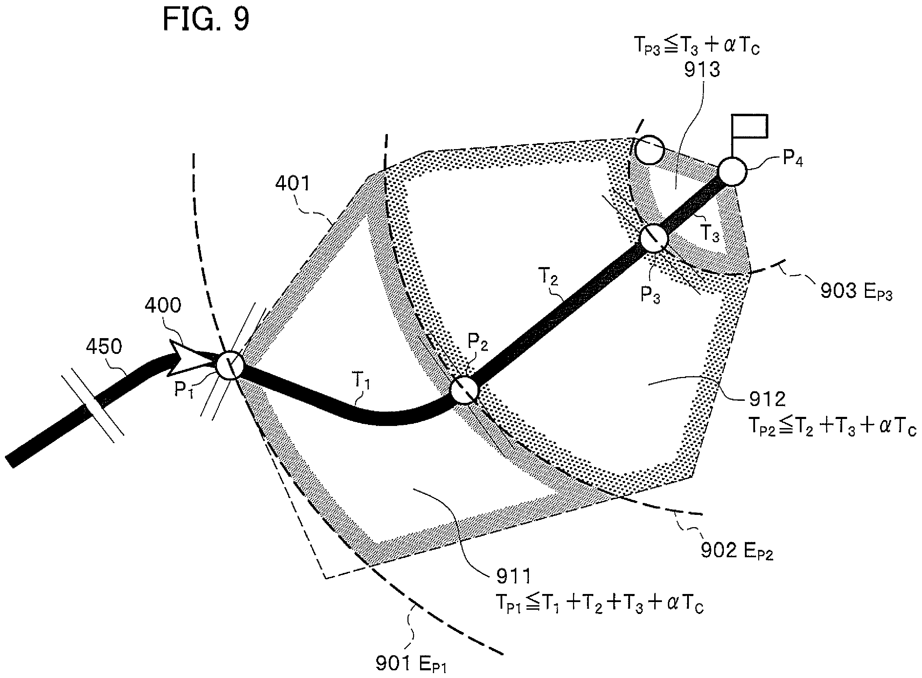

FIG. 8 is a flowchart showing a process, performed by the preparatory-route-search section 140 included in the server device 1, of setting a travelling cost. FIG. 9 shows a method of setting a condition for obtaining travelling costs in accordance with the present embodiment. In the process of setting a travelling cost, the preparatory-route-search section 140 sets a predetermined travelling cost used for defining an area in which a preparatory route is provided.

In a step S801, the preparatory-route-search section 140 retrieves information on nodes including the starting point $P_i$ and the ending point $P_{i+1}$ which are on the route divided in the step S301 shown in FIG. 3 from the master map database 111 included in the auxiliary storage section 11 in addition to the current position and the destination previously retrieved in the step S102 shown in FIG. 2.

In a step S802, the preparatory-route-search section 140 obtains the distance between the starting point $P_i$ and the destination, and sets the obtained distance to be a travelling cost $T_{P(i)}$ as a reference travelling cost. The preparatory-route-search section 140 defines an area $E_{P1}$ which can be reached from the destination by the travelling cost $T_{P(i)}$. In an example shown in FIG. 9, an area $E_{P1}$ (indicated by a broken line 901) is defined which can be reached by equal to or shorter than a travelling cost $T_{P1}$ where $T_{P(i)}=T_{P1}=T_1+T_2+T_3$ applies when starting point $P_i=P_1$. In the present embodiment, a travelling cost may be time or $CO_2$ emission necessary for reaching a destination. In this case, these are converted to distances before defining an area $E_{P1}$ limited by the broken line 901.

In a step S803, the preparatory-route-search section 140 sets a reference at a travelling cost $T_{P(i+1)}$ obtained between the ending point $P_{i+1}$ and the destination, and then, the preparatory-route-search section 140 sets an area $E_{P(i+1)}$ which can be reached from the destination for the travelling cost $T_{P(i+1)}$. In the example shown in FIG. 9, the preparatory-route-search section 140 sets an area $E_{P2}$ (indicated by a broken line 902) which can be reached within a travelling cost $T_{P2}$ if $T_{P(i+1)}=T_{P2}=T_2+T_3$ and if a starting point $P_{i+1}=P_2$.

In a step S804, the preparatory-route-search section 140 limits an area to be between the area $E_{P(i)}$ and the area $E_{P(i+1)}$ and to be within the preparatory-route-provided area. In the example shown in FIG. 9, the preparatory-route-search section 140 limits an area to be between the broken line 901 defining the area $E_{P1}$ and the broken line 902 defining the area $E_{P2}$ and to be within the preparatory-route-provided area 401.

In a step S805, the preparatory-route-search section 140 obtains a travelling cost condition from a mathematical expression (2) as follows for obtaining a preparatory route starting from a node existing in the area defined in the step S804 to the destination.

Travelling cost Condition $\leq T_{P(i)}+ \alpha \cdot Tc$

In the above mathematical expression (2), Tc indicates a margin cost; and $\alpha$ is a weighting parameter which makes the margin cost Tc decrease as a vehicle becomes close to the destination. For example, $\alpha$ may be defined by a mathematical expression (3) as follows.

$$\alpha = (T - \partial T) / T$$

In the above mathematical expression (3), T indicates a cost necessary for driving a vehicle from the starting point of a navigation route to the destination, and $\partial T$ indicates a cost necessary for driving the vehicle from the starting point to a predetermined point existing in the area defined by the preparatory-route-search section 140.

In the example shown in FIG. 9, the travelling cost condition $T_{P1}$ used for providing a preparatory route in the area $E_{P1}$ is indicated as $T_{P1} \leq T_1+T_2+T_3+\alpha Tc$.

In a step S806, the preparatory-route-search section 140 determines whether the ending point of the divided route has reached the destination. If the preparatory-route-search section 140 determines that the ending point of the divided route has not reached the destination (No from step S806), the operation returns to the step S801.

In the example shown in FIG. 9, the travelling cost condition $T_{P2}$ necessary for providing a preparatory route in the area $E_{P2}$ is indicated as $T_{P2} \leq T_2+T_3+\alpha Tc$; and the travelling cost condition $T_{P3}$ for providing a preparatory route in the area $E_{P3}$ is indicated as $T_{P3} \leq T_3+\alpha Tc$.

If the preparatory-route-search section 140 determines that the ending point of the divided route has reached the destination (Yes from step S806), the preparatory-route-search section 140 finishes the process of setting the travelling cost condition.

(Process of providing a preparatory route)

Hereafter, the step S106, shown in FIG. 2, of providing a preparatory route is explained.

FIG. 10 is a flowchart showing a process, performed by the preparatory-route-search section 140 included in the server device 1, of providing a preparatory route.

In a step S1001, the preparatory-route-search section 140 included in the server device 1 refers to the preparatory-route-provided area provided in the step S104 shown in FIG. 2.

In a step S1002, the preparatory-route-search section 140 refers to the master map database 111 included in the auxiliary storage section 11 and retrieves all the nodes existing in the preparatory-route-provided area.

In this step, the number of nodes to be retrieved may be filtered by retrieving only nodes that are connected to a principal route by using various information on coordinates of nodes, type of roads connected to the nodes, and widths of roads etc.

In a step S1003, the preparatory-route-search section 140 selects one of the retrieved nodes. In a step S1004, the preparatory-route-search section 140 determines as to in which one of the preparatory-route-provided areas the selected node exists, and then the preparatory-route-search section 140 refers to the travelling cost condition set in the step S805 shown in FIG. 8.

In a step S1005, the preparatory-route-search section 140 searches a route connecting the selected node to the destination. In a step S1006, the preparatory-route-search section 140 determines whether the navigation route satisfies the travelling cost condition set in the step S1004. If the preparatory-route-search section 140 determines that the cost for navigating a vehicle to the destination exceeds the predetermined travelling cost and does not satisfy the travelling cost condition (No from step S1006), the operation proceeds to a step S1008. In a step S1007, if the preparatory-route-search section 140 determines that the cost for navigating the vehicle to the destination does not exceed the predetermined travelling cost and satisfies the travelling cost condition (Yes from step S1006), the preparatory-route-search section 140 sets the navigation route as a preparatory route.

In the step S1008, the preparatory-route-search section 140 determines whether the processes S1003 to S1007 have been performed to all the nodes existing in the preparatory-route-provided area. If the preparatory-route-search section 140 determines that the processes S1003 to S1007 have not been performed to all the nodes existing in the preparatory-route-provided area (No from the step S1008), the operation returns to the step S1003. If the preparatory-route-search section 140 determines that the processes S1003 to S1007 have been performed to all the nodes existing in the preparatory-route-provided area (Yes from the step S1008), the preparatory-route-search section 140 finishes the operation.

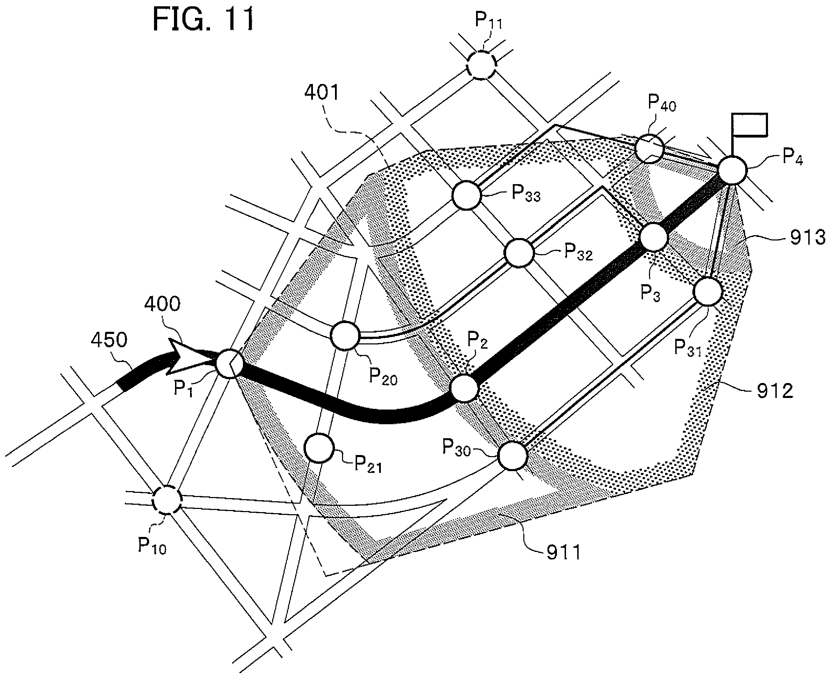

The process of providing a preparatory route shown in FIG. 10 will be explained in more detail with reference to FIG. 11.

FIG. 11 shows a method of setting a preparatory route in accordance with the present embodiment.

It is assumed that, in the step S1002 shown in FIG. 10, the preparatory-route-search section 140 has retrieved candidate nodes $P_{20}$, $P_{21}$, $P_{30}$, $P_{31}$, $P_{32}$, $P_{33}$, and $P_{40}$ existing in the preparatory-route-provided area and used for retrieving a preparatory route.

In a step S1003, the preparatory-route-search section 140 selects one of the retrieved nodes, e.g. the node $P_{20}$. In a step S1004, the preparatory-route-search section 140 applies the travelling cost condition (see the following mathematical expression (4)) to the area $E_{P1}$ set in the step S805 shown in FIG. 8 since the node $P_{20}$ exists in the area 911 as shown in FIG. 11.

$$T_{P1} \leq T_1 + T_2 + T_3 + \alpha Tc$$

In a step S1005, the preparatory-route-search section 140 searches a route connecting the node $P_{20}$ to the destination $P_4$. In a step S1006, the preparatory-route-search section 140 determines whether the travelling cost of the navigation route satisfies the condition defined in the mathematical expression (4). In a step S1007, if the preparatory-route-search section 140 determines that the travelling cost of the navigation route satisfies the condition defined in the mathematical expression (4) (Yes from the step S1006), the preparatory-route-search section 140 sets the route searched in the step S1005 and connecting the node $P_{20}$ to the node $P_4$ as a preparatory route.

The preparatory-route-search section 140 performs the steps S1003 to S1007 to all the nodes searched in the step S1002, and if the travelling cost of the navigation route satisfies the condition defined in the mathematical expression (4), the preparatory-route-search section 140 sets the navigation route as a preparatory route.

The preparatory-route-search section 140 having the above explained configuration can extract only a preparatory route which is equal to or lower than the predetermined travelling cost. (Process for searching a route based on information on a preparatory route searched by the navigation device)

Hereafter, a process performed in the step S210 shown in FIG. 2 for searching a route by using a preparatory route.

FIG. 12 is a flowchart showing a process, performed by a navigation controller section 20 included in the navigation device 2, of searching a route based on a preparatory route according to the present embodiment.

If the navigation controller section 260 included in the navigation device 2 determines that a vehicle deviates from a navigation route (Yes from step S208), and if information on a preparatory route set for the navigation route has been obtained from the server device 1 and stored in the auxiliary storage section 21 (Yes from the step S209), the supplementary-route-search section 251 performs a process of searching a route based on the information on the preparatory route.

In a step S1201, the supplementary-route-search section 251 refers to the information on the preparatory route included in the preparatory-route information 212 stored in the auxiliary storage section 21, and then, selects a preparatory route having a node closest to the current position of the vehicle. When searching a preparatory route in the step S1201, the supplementary-route-search section 251 considers not only the distance between the current position and the closest node but also the travelling direction of the vehicle to give a high priority to a node searched ahead in the travelling direction of the vehicle attached with the navigation device 2.

In a step S1202, the supplementary-route-search section 251 sets the node, which is the closest to the current position of the vehicle and which constitutes the searched preparatory route, as a temporary destination, and then the supplementary-route-search section 251 searches a route connecting the current position to the temporary destination.

The supplementary-route-search section 251 uses the navigation route as a supplementary route for connecting the current position to the preparatory route.

In a step S1203, the supplementary-route-search section 251 determines whether the travelling cost necessary for moving the vehicle from the current position to the temporary destination will exceed a predetermined value, since the current position of the vehicle becomes more distant from the preparatory route from the view points of time and distance if the vehicle continues to travel after deviating from the navigation route. If the supplementary-route-search section 251 determines that the travelling cost necessary for moving the vehicle from the current position to the temporary destination will not exceed the predetermined value (No from the step S1203), the operation proceeds to a step S1204. In the step S1204, the supplementary-route-search section 251 sets a route obtained by combining the supplementary route with the preparatory route as a new route for navigating the vehicle from the current position to the destination.

Even if the vehicle deviates from the navigation route, the navigation device 2 having the above explained configuration can provide a new route for navigating the vehicle to the destination without communicating with the server device 1 because the supplementary-route-search section 251 uses the previously obtained preparatory route. More specifically, since the preparatory route was searched by the server device 1, the navigation device 2 will not have to request the server device 1 for a new route even if the vehicle deviates from the navigation route. Therefore, the navigation device 2 can continue to navigate the vehicle on the route obtained based on the latest information stored in the server device 1.

If the supplementary-route-search section 251 determines that the travelling cost for moving the vehicle from the current position to the temporary destination will exceed the predetermined value (Yes from the step S1203), the operation proceeds to a step S1205. In the step S1205, the navigation controller section 260 uses the display section 25, or emits a voice message, to notify the user (or driver) that the navigation device 2 can no longer continue navigating the vehicle to the destination on the currently navigated route.

In a step S1206, the navigation controller section 260 determines whether the search-condition-setting section 220 included in the navigation device 2 should request the server device 1 for searching a new route. If the navigation controller section 260 determines that the search-condition-setting section 220 included in the navigation device 2 should request the server device 1 for searching a new route (Yes from the step S1206), the operation proceeds to a step S1207. In the step S1207, the route-request-transmitter section 230 transmits a request to the server device 1 for searching a new route.

In a step S1208, the route-request-transmitter section 230 monitors whether communication error occurs while the navigation device 2 continues to search a new route in view of a possibility that communication between the navigation device 2 and the server device 1 may become unstable if structures such as tunnel or building prevent the passage of the radiowaves used for the communication between the navigation device 2 and the server device 1. If the route-request-transmitter section 230 determines that communication error has not occurred while the navigation device 2 continues to search a new route (No from the step S1208), the operation returns to the step S205 shown in FIG. 2 to obtain information from the server device 1.

If the route-request-transmitter section 230 determines that communication error has occurred while the navigation device 2 continues to search a new route (Yes from the step S1208), the operation proceeds to a step S1209. In the step S1209, the route-request-transmitter section 230 memorizes the number of trying to restore the communication between the navigation device 2 and the server device 1, and determines whether the number of retrying exceeds a predetermined value. If the route-request-transmitter section 230 determines that the number of retrying does not exceed the predetermined value (No from the step S1209), the operation returns to the step S1207. In the step S1207, the route-request-transmitter section 230 transmits a request to the server device 1 for searching a new route. If the route-request-transmitter section 230 determines that the number of retrying exceeds the predetermined value (Yes from the step S1209), the route-request-transmitter section 230 stops trying to restore the communication between the server device 1 and the navigation device 2, and then, the operation proceeds to a step S1210. In the step S1210, the route-search section 250 searches a new route connecting the current position to the destination by using information included in the map database 213 stored in the auxiliary storage section 21 included in the navigation device 2.

Sometimes, a route searched by using the travelling cost calculated by the navigation device 2 may be different from the navigation route which is provided by the server device 1 previously. In the present embodiment, the most important factor for the route-search section 250 is to continue navigating the vehicle to the destination by using the route searched by the navigation device 2 even if the preparatory route may become invalid or the communication may become unstable between the navigation device 2 and the server device 1.

Hereafter, a process of navigating the vehicle based on the preparatory route searched by the navigation device 2 will be explained in detail.

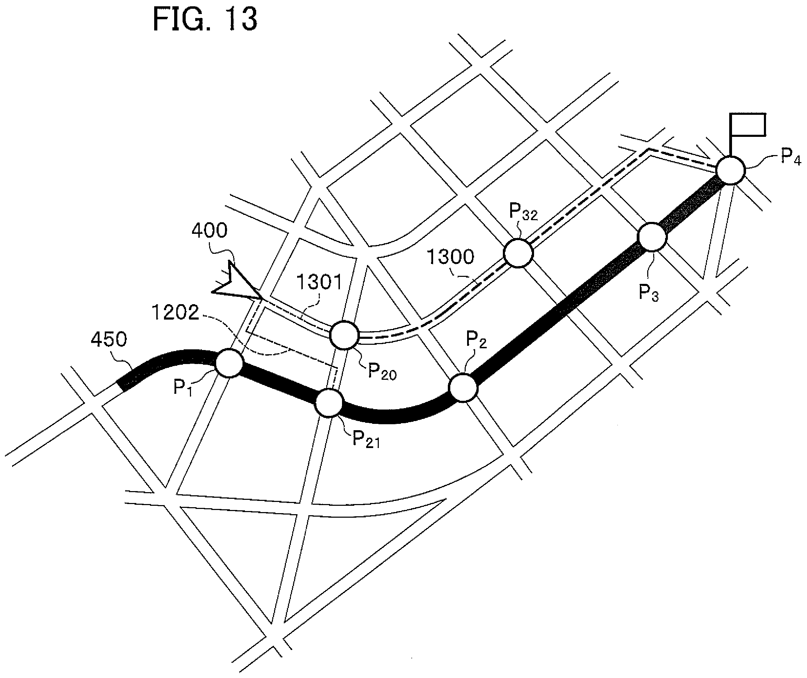

FIG. 13 shows a process of route search performed by a navigation control section of the navigation device based on preparatory route information. FIG. 13 shows an area in which a new route is searched based on the preparatory route information sent by the navigation device in accordance with the present embodiment. FIG. 13 shows an example in which the supplementary-route-search section 251 uses the preparatory route to search a new route when the vehicle having the navigation device 2 deviates from the navigation route (referred to as 450) and when the vehicle is currently positioned at a point 400.

In the step S1201, the supplementary-route-search section 251 searches a preparatory route (referred to as 1300) including a node $P_{20}$ which indicates the current position of the vehicle. The node P20 is the closest to the point 400 and is the starting point of the preparatory route. The preparatory route 1300 connects the node $P_{20}$ as the starting point to the destination $P_4$.

In the step S1202, the supplementary-route-search section 251 searches a supplementary route which connects the node $P_{20}$ to the current position 400. If the current position 400 is close to a node $P_{32}$ disposed in the middle of the preparatory route 1300, the supplementary-route-search section 251 sets the node $P_{32}$ as a node included in the preparatory route 1300. Alternatively, the supplementary-route-search section 251 may use another route for returning the vehicle to the previous navigation route instead of using a new route searched by using the preparatory route 1300. In this case, the supplementary-route-search section 251 searches a supplementary route which connects to a node as a temporary destination which is disposed on the previous navigation route and is the closest to the current position 400. The supplementary-route-search section 251 may search a supplementary route which connects to a node $P_{21}$ which is set as a temporary destination and can be reached form the current position 400 by the minimum cost. Since the supplementary-route-search section 251 sets a node which is closest to the current position of the vehicle as a temporary destination to search a supplementary route, the distance for travelling the supplementary route is relatively short. Therefore, the difference is not so great between the travelling cost of the supplementary route searched from information included in the map database 213 included in the navigation device 2 and the travelling cost of a route searched by the server device 1.

Even if the vehicle deviates from the navigation route, the navigation device 2 having the aforementioned configuration can continue navigating the vehicle without requesting that the server device 1 search a new route because the navigation device 2 uses information on the preparatory route previously obtained from the server device 1 including the latest roadmap data.

The navigation device, the route-search server (server device), and the route-search system according to the present embodiment having the above explained configuration can search a new route by using the previously obtained preparatory route without requesting that the server device 1 search a new route connecting to the destination even if the vehicle deviates from the navigation route searched by the server device 1. Therefore, the present invention can reduce communication cost necessary for route search and can continue searching a new route without being influenced by unstable communication.

That is, since the user of the navigation device 2 can continue to use information on the route searched by the server device 1 having the latest information even if the vehicle is at a position deviated from the navigation route, the user will not be disturbed by unstable communication between the server device 1 and the navigation device 2 which may be caused by a temporary radiowaves disturbance. Therefore, the present invention provides a reliable means of radiowaves navigation control.

In addition, the present invention can reduce the quantity of information transmitted from the server device 1 to the navigation device 2 since the preparatory-route-search section 140 searches a preparatory route, which satisfies the travelling cost condition, to the destination.

In addition, since the server device 1 according to the present invention can search a route by using information provided from the externally-located information center 5, the server device 1 can search a new route by considering more various kinds of information including not only traffic information but also charge and busy hour of facilities, planned events, a popular route searched based on data for the number of vehicles, in addition to information stored in the navigation device 2 including distance, time, and toll etc. Therefore, the present invention can improves usability of the navigation device 2 since the navigation device 2 can provide more user-friendly information in various kinds.

(Modified Example of a process of searching a navigation route and a preparatory route)

Hereafter, a modified example of searching a navigation route and a preparatory route performed by the route-search system 7 shown in FIG. 1. In the flowchart of FIG. 2 showing the operation performed by the route-search system 7, the navigation-route-search section 130 included in the server device 1 searches a navigation route by using information stored in the master map database 111. After that, the preparatory-route-search section 140 searches a preparatory route in the vicinity of the route searched by the navigation-route-search section 130, and then the information on the preparatory route and the navigation route are transmitted to the navigation device 2 from the server device 1.

An object of the modified example is to reduce the quantity of information transmitted from the server device 1 to the navigation device 2. To summarize the modified example, the route information transmitter section 150 included in the server device 1 selects a plurality of candidate nodes as a group of route points (e.g. cross points where trunk routes cross each other) from nodes constituting a navigation route and a preparatory route. The route information transmitter section 150 transmits the information on the group of route points (including coordinates and the sequential order of arranging thereof) to the navigation device 2, and then, the navigation device 2 searches a new route based on the transmitted information.

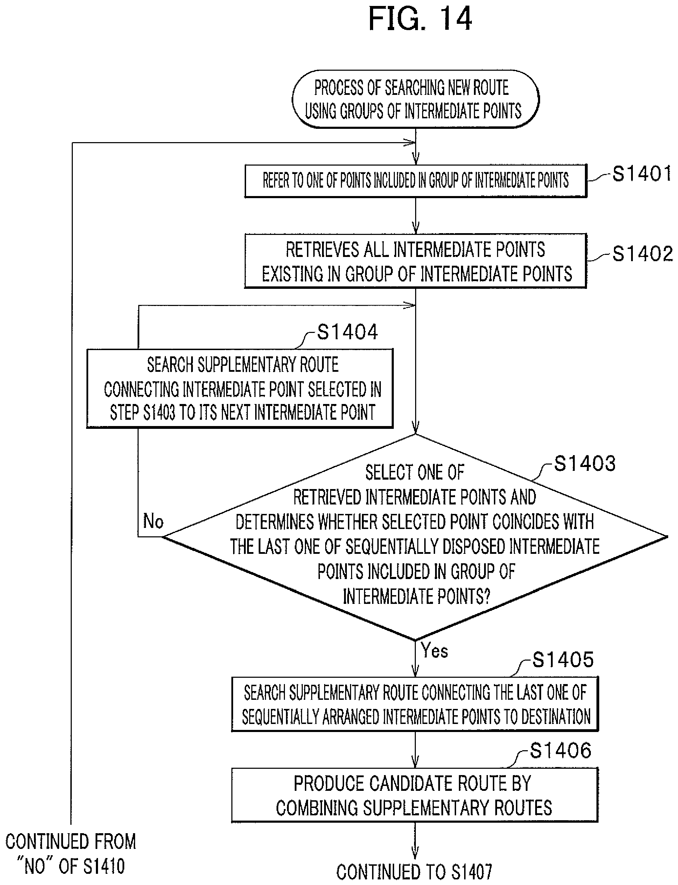

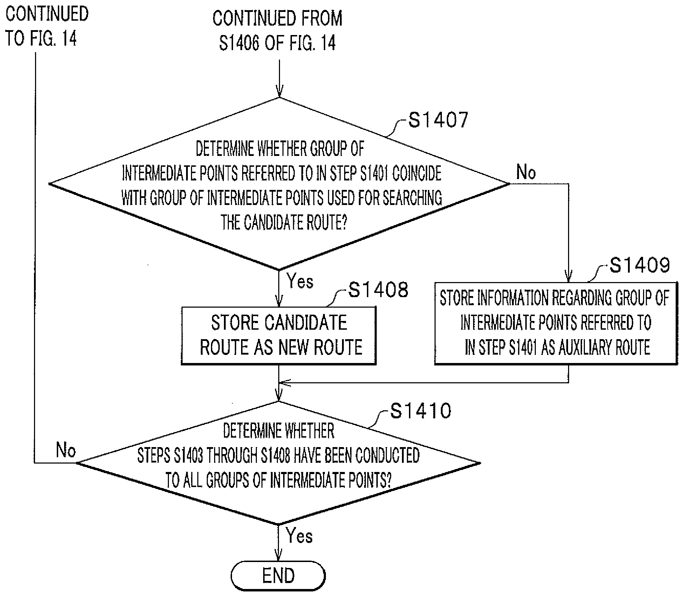

FIG. 14 is a flowchart showing a process, performed by the navigation device 2 according to the present embodiment, of searching a navigation route and a preparatory route by obtaining information associated with a group of route points from the server device.

Hereafter, operations of searching a navigation route and searching a preparatory route performed by the navigation device 2 will be explained with reference to FIG. 14.

In a step S1401, the route information acquisition section 240 included in the navigation device 2 obtains route information on the group of route points included in a navigation route and in a preparatory route. In a step S1401, the route-search section 250 refers to one of the groups of route points. The group referred is used to create a route.

In a step S1402, the route-search section 250 retrieves all the route points included in the referred group.

In a step S1403, the route-search section 250 selects one of the retrieved route points and determines whether the selected point has reached the last one of the sequentially disposed route points included in the referred group. If the route-search section 250 determines that the selected point has not reached the last one of the sequentially disposed route points included in the referred group (No from the step S1403), the operation proceeds to a step S1404. In the step S1404, the route-search section 250 searches a supplementary route connecting the route point selected in the step S1403 to its next route point. If the route-search section 250 determines that the selected point has reached the last one of the sequentially disposed route points included in the referred group (Yes from the step S1403), the operation proceeds to a step S1405. In the step S1405, the route-search section 250 searches a supplementary route connecting the last one of the sequentially arranged route points to the destination. The route-search section 250 continues to search a supplementary route between two neighboring route points included in the referred group by performing the steps S1403 through S1405 until searching the supplementary route connecting the last one of the sequentially arranged route points to the destination.

In a step S1406, the route-search section 250 searches a candidate route by combining these supplementary routes.

In a step S1407, the route-search section 250 determines whether the group referred in the step S1401 has reached the group of route points used for searching the candidate navigation route. If the route-search section 250 determines that the group referred in the step S1401 has reached the group of route points used for searching the candidate navigation route (Yes from the step S1407), the operation proceeds to a step S1408. In the step S1408, the route-search section 250 stores the candidate route in the navigation route information 211 stored in the auxiliary storage section 21 as a new route. If the route-search section 250 determines that the group referred in the step S1401 has not reached the group of route points used for searching the candidate navigation route (No from the step S1407), the route-search section 250 determines that the group referred in the step S1401 should be used for searching a preparatory route. In this case, the operation proceeds to a step S1409. In the step S1409, the route-search section 250 stores information on the group referred in the step S1401 in the preparatory-route information 212 stored in the auxiliary storage section 21 as a preparatory route.

In a step S1410, the route-search section 250 determines whether the steps S1403 through S1408 have been conducted to all the groups of route points. If the route-search section 250 determines that the steps S1403 through S1408 have not been conducted to all the groups of route points (No from the step S1410), the operation returns to the step S1401 to fine a next group of route points. If the route-search section 250 determines that the steps S1403 through S1408 have been conducted to all the groups of route points (Yes from the step S1410), the route-search section 250 finishes the operation.

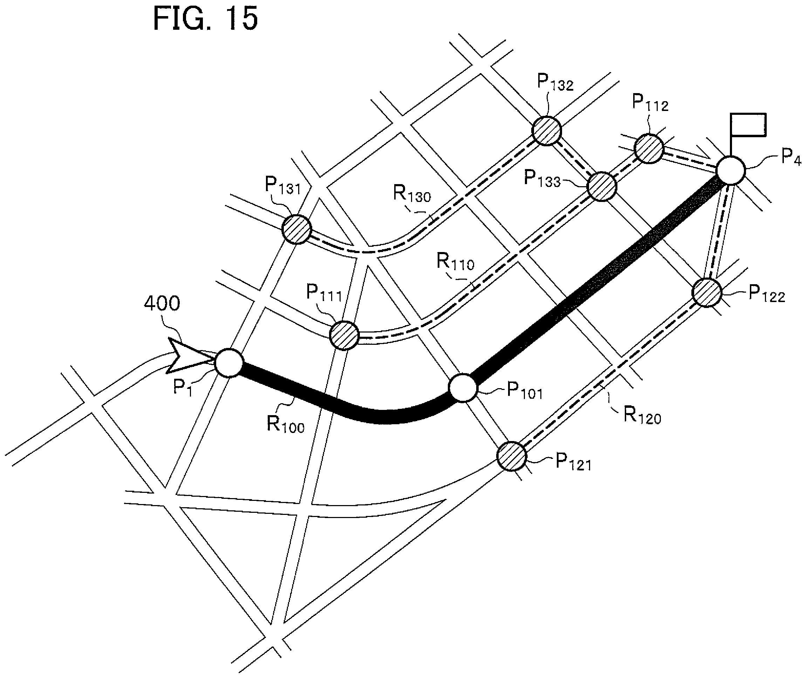

FIG. 15 shows the navigation route and the preparatory route generated by the route-search system using the group of route points.

As shown in FIG. 15, a node $P_{101}$ is an route point disposed on a route $R_{100}$. In addition, other route points shown in FIG. 15 also constitute other preparatory routes. Nodes $P_{111}$ and $P_{112}$ are included in a group of route points constituting a preparatory route $R_{110}$. Nodes $P_{121}$ and $P_{122}$ are included in a group of route points constituting a preparatory route $R_{120}$. Nodes $P_{131}$, $P_{132}$, and $P_{133}$ are included in a group of route points constituting a preparatory route $R_{130}$. These groups of route points are transmitted from the server device 1.

For example, in the step S1401, the route-search section 250 refers to the group of route points including the nodes $P_{111}$ and $P_{112}$ constituting the preparatory route $R_{110}$. In the step S1402, the route-search section 250 retrieves the nodes $P_{111}$ and $P_{112}$. In the step S1404, the route-search section 250 searches a supplementary route connecting the node $P_{111}$ to the node $P_{112}$. In the step S1405, the route-search section 250 searches a supplementary route connecting the last one of the sequentially arranged nodes, i.e. the node $P_{112}$ to the destination. The route-search section 250 combines all the supplementary routes to obtain a preparatory route R110 and to store the preparatory route R110 in the auxiliary storage section 21 as preparatory-route information 212.

The modified example of the present embodiment having the above explained configuration can reduce the quantity of information transmitted from the server device 1 to the navigation device 2. Even if the vehicle deviates from the navigation route, the navigation device 2 having the aforementioned configuration can continue navigating the vehicle without requesting the server device 1 for a new route search because the navigation device 2 uses information on the preparatory routes created based on the groups of route points.

It should be noted that, the route points included in the groups of route points explained in the modified example of the present embodiment will not be limited to nodes (intersections) on a navigation route to be searched or on a preparatory route. The route points included in the groups of route points explained in the modified example of the present embodiment may relate to equipment or landmark existing in the vicinity of a navigation route.

(Modified example of transmitting a preparatory route in split mode)

In a modified example, a preparatory route may be transmitted in a split mode by the route information transmitter section 150 included in the server device 1.

In this modified example, the route information transmitter section 150 divides a preparatory route calculated by the preparatory-route-search section 140, and gives priorities to the divided preparatory sub-routes. The divided preparatory sub-routes are transmitted to the navigation device 2 in accordance the priorities given by the route information transmitter section 150. In contrast, in the step S108 of the previous embodiment, information on a route searched and preparatory routes set for the navigation route is transmitted altogether to the navigation device 2. Since, in this modified example, information on the divided preparatory sub-routes is transmitted to the navigation device 2 in a split mode, the time length in each transmission can be shortened, and therefore, the information on the preparatory routes can be transmitted to the navigation device 2 more reliably by transmitting the information when radiowaves condition is in good condition. In this modified example of transmitting the preparatory routes in a split mode, in order to respond to the information transmitted from the navigation device 2 to the server device 1 including a request of transmitting information on preparatory routes in a split mode, the step S108 shown in FIG. 2 is configured to transmit the information on the preparatory routes in a plurality of times in accordance with the number of split indicated in the received request. In response to the request, the server device 1 transmits information on the relationship between the divided preparatory sub-routes and the route searched to the navigation device 2 together with information indicating that the preparatory route has been divided into a plurality of preparatory sub-routes. If the navigation device 2 determines that the received information includes data of the divided preparatory sub-routes, the route-search system 7 combines the data of the divided preparatory sub-routes with the previously obtained and navigation route to update information on the navigation route in the step S205, and then continues navigating a vehicle in the step S206.

For example, in one method of dividing information on a preparatory route as shown in FIG. 11, a preparatory route is divided into a plurality of areas 911, 912, and 913 in accordance with distances of nodes $P_2$, $P_3$, and $P_4$ from the current position 400 of a vehicle, and then, the server device 1 transmits information on the divided preparatory sub-routes in the order of nodes closer to the current position 400. In this configuration, the navigation device 2 can start navigating the vehicle when the navigation device 2 receives the information on the divided preparatory sub-route disposed in the area 911 even if the navigation device 2 has not received the information on the divided preparatory sub-routes disposed in the areas 912 and 913. In an ordinary case, e.g. in the previous embodiment, the server device 1 tries to transmit the information on the divided preparatory sub-route disposed in the area 912 immediately after finishing the transmission of the information on the divided preparatory sub-route disposed in the area 911. However, in the modified example, the transmission of the information on the divided preparatory sub-routes disposed in the areas 912 and 913 may be finished during the time in which the vehicle is travelling a route disposed in the area 911 after starting the current position 400 shown in FIG. 11. Therefore, in the modified example, the server device 1 or the navigation device 2 may calculate the length of time necessary for transmitting the information on the divided preparatory sub-routes from data size and transmission rate or may calculate the time at which the vehicle reaches an arbitrary point to set times at which transmissions of the information on the divided preparatory sub-routes starts so that the transmissions of the information on the divided preparatory sub-routes ends before the vehicle reaches the areas having the divided preparatory sub-routes of which information have not transmitted to the navigation device 2. It is assumed that a driver of a vehicle immediately after starting travelling on a navigation route has to obtain various kinds of information by means of wireless communication. In the modified example, the driver of the vehicle in such a state can obtain information in various kinds by wireless communication of which starting time is scheduled by the server device 1 or the navigation device 2 between transmissions of information on the divided preparatory sub-routes.

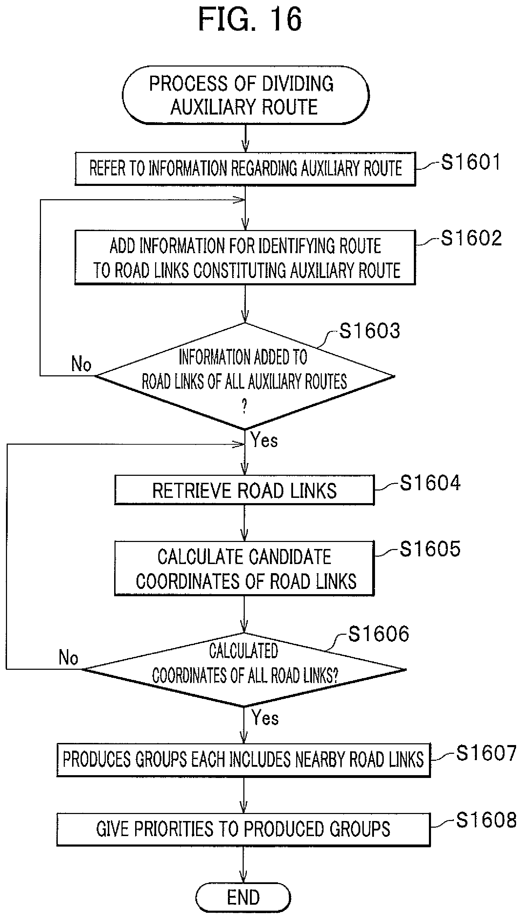

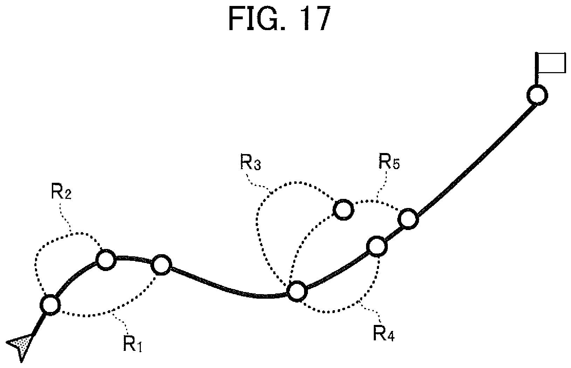

In another method of dividing information on preparatory sub-routes, closeness of the preparatory sub-routes or distances of the preparatory sub-routes may be used. The process shown in FIG. 16 of dividing a preparatory route into a plurality of preparatory sub-routes will be explained with reference to FIG. 17.

In the modified example, the process of dividing a preparatory route into a plurality of preparatory sub-routes will be performed in the step S108 shown in FIG. 2, in which the route information transmitter section 150 included in the server device 1 transmits information to the navigation device 2. The information on the divided preparatory sub-routes calculated by the preparatory-route-search section 140 is stored in the auxiliary storage section 11. In a step S1601, the preparatory-route-search section 140 refers to information on preparatory sub-routes $R_1$ to $R_5$ stored in the auxiliary storage section 11. In a step S1602, the preparatory-route-search section 140 adds a route identification code and road link order information to each road link constituting each preparatory route. The route identification code is used for identifying each road link constituting each preparatory route. The road link order information is used for identifying the order of each road link counted from the starting point of a non-divided state of the preparatory route. In a step S 1603, the preparatory-route-search section 140 determines whether the preparatory-route-search section 140 adds route identification code and road link order information to all the road links. If the preparatory-route-search section 140 determines that the preparatory-route-search section 140 has not added route identification code and road link order information to all the road links (No from the step S1603), the operation returns to the step S1602. If the preparatory-route-search section 140 determines that the preparatory-route-search section 140 has added route identification code and road link order information to all the road links (Yes from the step S1603), the operation proceeds to a step S1604. In the step S1604, the preparatory-route-search section 140 retrieves the road links one after another. In a step S1605, the preparatory-route-search section 140 sets the value of a candidate coordinate of each road link extracted from data of coordinates of nodes constituting each retrieved road link. In a step S1606, the preparatory-route-search section 140 determines whether candidate coordinates have been set to all the retrieved road links. If the preparatory-route-search section 140 determines that candidate coordinates have not been set to all the retrieved road links (No from the step S1606), the operation returns to the step S1604. If the preparatory-route-search section 140 determines that candidate coordinates have been set to all the retrieved road links (Yes from the step S1606), the operation proceeds to a step S1607. In the step S1607, the preparatory-route-search section 140 creates groups of road links having close coordinates by clustering the candidate coordinates of the road links. In the example shown in FIG. 17, two groups are created. One group includes the preparatory sub-routes $R_1$ and $R_2$, and the other group includes the preparatory sub-routes $R_3$ to $R_5$. After that, the preparatory-route-search section 140 gives priorities to the formed groups, according to which the information on each divided preparatory sub-route is transmitted. In a step S1608, the preparatory-route-search section 140 gives a sequence number to each group so that a group having a higher priority will be given a smaller sequence number, and a group having a lower priority will be given a greater sequence number by considering distance to each group from the current position of the vehicle, the number of road links included in each group, and the largeness of the area of each group etc. Although, in the above explained modified example, a preparatory route is divided into a plurality of preparatory sub-routes based on road links, a preparatory route may be divided into a plurality of preparatory sub-routes based on road segments or nodes each including a plurality of road links. Alternatively, if a preparatory route is divided into a plurality of preparatory sub-routes based on the length of the preparatory route, the preparatory-route-search section 140 can transmit information on a route having a short distance allowing the vehicle to return immediately to the route from which the vehicle deviated.

(Configuration 1 for preventing bad wireless communication)

Hereafter, a modified example of searching a new route performed by the navigation-route-search section 130 included in the server device 1 will be explained.

If a driver (or user) driving a vehicle attached with the navigation device 2 needs to obtain information from the server device 1 by wireless communication (often in a split mode), the vehicle should preferably travel on a route on which wireless communication is in a good condition. For that purpose, the navigation-route-search section 130 stores communication condition data, which may be flags, each of which corresponds to a predetermined road segment or an area, and each of which is included in the external information database 112 included in the server device 1. The communication condition data are used for determining whether wireless communication can be performed in a good condition. In this configuration, the navigation-route-search section 130 searches a route to a destination on which wireless communication can be performed in a good condition because a route on which a bad communication condition will be estimated can be eliminated in route search by setting a cost to be higher to a road segment which is considered to have a bad communication condition with reference to the communication condition data. The route information transmitter section 150 transmits such a route as a reliable route for performing a good wireless communication to the navigation device 2. In this configuration, the driver of the vehicle (user of the navigation device 2) travelling on a route navigated by the navigation device 2 can obtain both the information on the divided preparatory sub-routes and the information on road-side equipment or regarding Point of Interest (POI) from the server device 1 reliably. In the present modified example, if the vehicle deviates from a previously navigation route, the navigation device 2 can continue navigating the vehicle to a destination without frustrating the driver due to a bad wireless communication. Herein the communication condition data which will be stored in the external information database 112 may be obtained by the external information acquisition section 110 from the externally-located information center 5 via the communication section 12. Alternatively, the communication condition data which will be stored in the external information database 112 may be estimated by using information on directions and distances extracted from map data or from data stored in a base station, both of which are stored in the master map database 111.

(Configuration 2 for preventing bad wireless communication)

Since the method described in "Configuration 1 for preventing bad wireless communication" attempts to search a route on which a good wireless communication can be obtained, this method cannot satisfy a driver of a vehicle attached with the navigation device 2 if the driver has some place that he or she would like to drop by, and if wireless communication is considered to be in a bad condition near such a place. In this configuration, the previously explained communication condition data are used not for route search but for the route information transmitter section 150 to determine the timings of transmitting information on the divided preparatory sub-routes in a split mode. The configuration 2 will be explained with reference to FIG. 11. The route information transmitter section 150 refers to the communication condition data stored in the external information database 112. When the route information transmitter section 150 determines that a place on which wireless communication cannot be conducted in a good condition exists on the divided area 912 or on the route searched in the divided area 912, the route information transmitter section 150 calculates a time necessary for transmitting information on the divided preparatory sub-routes based on size of data to be transmitted, data transmission rate in the divided area 911 obtained from the communication condition data, travelling velocity of the vehicle, and the distance for the vehicle to reach the divided area 913 etc. Subsequently, the route information transmitter section 150 sets time to start transmitting information on the divided preparatory sub-routes to the navigation device 2 by using the information on the estimated time for the vehicle to reach an arbitrary point so that the information on the divided preparatory sub-routes disposed in the divided areas 912 and 913 can be transmitted before the vehicle gets out of the divided area 911. After that, the route information transmitter section 150 transmits the information set as explained above to the navigation device 2. Since the navigation device 2 receives the information on the divided preparatory sub-routes to be travelled while the vehicle is travelling in an area in which the navigation device 2 can communicate with the server device 1 in a good condition, the navigation device 2 can navigate the vehicle to a destination without frustrating the driver or user who tries to return to the previously navigation route from a deviated position. Configuration 3 in view of possibility that a vehicle is going to deviate, or has deviated, from a preparatory-route-provided area

Hereafter, a modified example of a process, performed by the navigation controller section 260 included in the navigation device 2 shown in FIG. 1, for navigating a vehicle will be explained. In addition, a modified example of a process for transmitting information on a navigation route performed by the route information transmitter section 150 included in the server device 1 will be explained. When the navigation controller section 260 determines that the vehicle has deviated from the navigation route by considering the current position of the vehicle obtained from the position information acquisition section 210, the route information transmitter section 150 refers to the preparatory-route information 212 and continues navigating the vehicle to a destination by using the preparatory route connecting the point from which the vehicle deviated. The preparatory-route information 212 includes information on the preparatory-route-provided area. The navigation controller section 260 determines whether the vehicle will get out of the preparatory-route-provided area every time the position of the vehicle is updated. Since preparatory sub-routes differ based on the shape of a navigation route, the server device 1 or the navigation device 2 according to the present invention controls a preparatory-route-provided area by means of rectangles, i.e. meshes. In the present modified example, the server device 1 causes the route information transmitter section 150 to transmit information for identifying route information, information on preparatory route, and information on a preparatory-route-provided area, to the navigation device 2. Since a preparatory-route-provided area is larger than an area in which a preparatory route actually exists, it is very likely that the vehicle gets out of the area in which a preparatory route exists before the navigation controller section 260 determines that the vehicle gets out of the preparatory-route-provided area. To address this, in the present modified example, a preparatory-route-provided area is controlled by means of unit mesh formed by a small rectangle area having horizontal and vertical members each having several kilometers of length.

When the navigation controller section 260 determines that the vehicle gets out of the preparatory-route-provided area, the navigation controller section 260 controls the route-request-transmitter section 230 to send a request to the server device 1 for searching a route connecting a destination to the current position of the vehicle, an arbitrary point ahead of the vehicle in the travelling direction of the vehicle, or a point designated by the user.

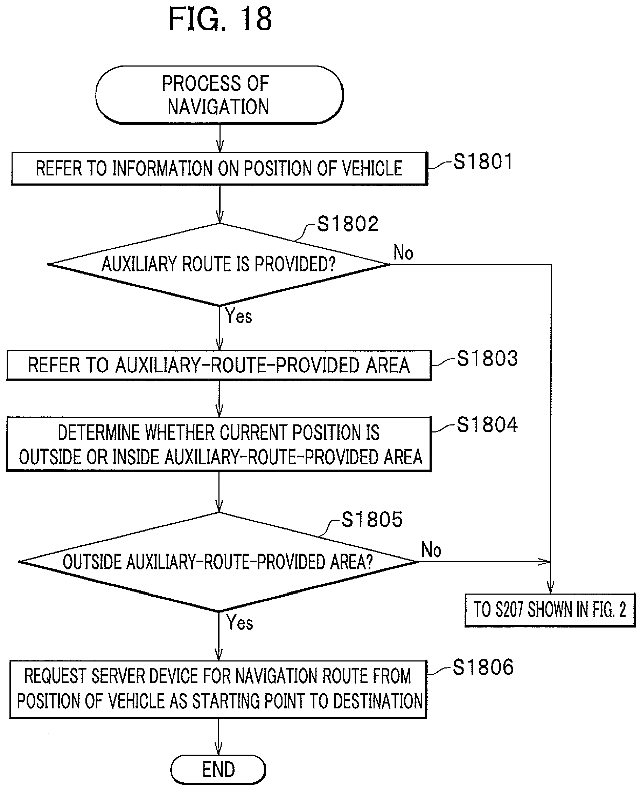

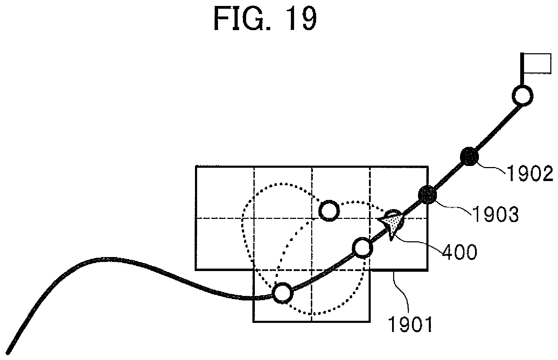

Hereafter a process, conducted by the navigation controller section 260, of determining whether the vehicle gets out of a preparatory-route-provided area will be explained with reference to FIGS. 18 and 19.

When the position information acquisition section 210 updates the current position of the vehicle, the navigation controller section 260 performs an operation including steps S1801 to S1806. In a step S1801, the navigation controller section 260 refers to the information on the current position of the vehicle updated by the position information acquisition section 210. In a step S1802, the navigation controller section 260 determines, based on the preparatory-route information 212, whether the navigation controller section 260 has obtained the information on a preparatory route created based on the navigation route. If the navigation controller section 260 determines that the navigation controller section 260 has obtained the information on a preparatory route created based on the navigation route (Yes from the step S1802), the operation proceeds to a step S1803. In the step S1803, the navigation controller section 260 refers to the preparatory-route-provided area. As shown in FIG. 19, areas including a preparatory route are controlled by means of a plurality unit meshes. In a step S1804, the navigation controller section 260 puts a point 1902 on an arbitrary position, which the vehicle will pass through, on the navigation route. The point 1902 may be put in the vicinity of the portion, which the vehicle will pass through, of the navigation route. The navigation controller section 260 draws a line between the point 1902 and the current position 400 of the vehicle. The navigation controller section 260 calculates the number of points at which the line crosses the border line of an area 1901. After that, the navigation controller section 260 determines whether the vehicle gets out of the area 1901 in which a preparatory route is provided.

If the navigation controller section 260 determines that the vehicle does not get out of the area 1901 (No from the step S1805), the navigation controller section 260 performs the operation following the step S207. If the navigation controller section 260 determines that the vehicle gets out of the area 1901 (Yes from the step S1805), the operation proceeds to a step S1806. In the step S1806, the navigation controller section 260 requests the server device 1 for searching a route connecting the current position 400 of the vehicle to a destination, and then, the navigation controller section 260 finishes the operation.

If the navigation controller section 260 is configured to request the server device 1 for searching a route before the vehicle gets out of the area 1901, the user, or the driver can obtain new information on a route for navigating the vehicle and new information on a preparatory route immediately, i.e. without waiting for a response from the server device 1. In this case, instead of performing the step S1804, the navigation controller section 260 puts a point 1903, at an arbitrary position on the border line of the area 1901 wherein the vehicle travelling on the navigation route will pass through the point 1903. The navigation controller section 260 measures the distance between the current position 400 of the vehicle and the point 1903. In the step S1805, if the navigation controller section 260 determines that the distance measured between the current position 400 of the vehicle and the point 1903 is equal to or exceeds a predetermined length, e.g. 1 kilometer, the navigation controller section 260 determines that the vehicle is very likely to get out of the area 1901 and performs a step S1806.

If the route-request-transmitter section 230 included in the navigation device 2 has not sent a request to the server device 1 for searching a route, the route-request-transmitter section 230 requests the server device 1 for information for identifying the navigation route and for the information indicating that the user or the driver wants to continue route search. The route-request-processing section 120 included in the server device 1 determines whether the information transmitted from the route-request-transmitter section 230 indicates that the user or the driver wants to continue route search. The route-request-processing section 120 included in the server device 1 determines whether the information transmitted from the route-request-transmitter section 230 indicates that the user or the driver wants to continue route search. If the route-request-processing section 120 determines that the information sent from the route-request-transmitter section 230 indicates that the user or the driver wants to continue route search, the route information transmitter section 150 calculates a difference between the navigation route and a new navigation route and calculates a difference between a currently created preparatory route and a new preparatory route. The route information transmitter section 150 transmits the calculated differences to the navigation device 2. The route information transmitter section 150 keeps memorizing the information on a navigation route and a preparatory route, for example, for the past two hours.

When the navigation device 2 receives the differences calculated by the route information transmitter section 150, the navigation device 2 updates the information on the navigation route included in the navigation route information 211 and updates the information on the preparatory route included in the preparatory-route information 212 by replacing them with the received differences, and by deleting some portion from or by adding some portion to the previously obtained information. For example, if two new preparatory sub-routes are created between a node $P_{33}$ and the destination $P_4$ and between a node $P_{11}$ and the destination $P_4$ as shown in FIG. 11, information on the preparatory route starting from the node $P_{11}$ will be transmitted to the navigation device 2 because this preparatory route does not exist in the previously obtained preparatory route. Although the preparatory route starting from the node $P_{33}$ exists in the previously obtained preparatory route, if information on the preparatory route starting from the node $P_{33}$ differs from the previously obtained preparatory route, this information will be transmitted to the navigation device 2. In the present modified example, it is assumed that only the preparatory route starting from the node $P_{11}$ is selected as a new preparatory route and is transmitted to the navigation device 2. The navigation device 2 stores the new preparatory route transmitted from the server device 1 in the preparatory-route information 212. The navigation device 2 is configured to use the stored new preparatory route and the previously obtained preparatory route for searching a route when the vehicle deviates from the navigation route.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A route-search server (1) usable in a route-search system also comprising a navigation device (2), said server (1) being connectible to said navigation device (2) via a communication network (3), the route-search server (1) comprising:

    a storage section (11) including a master map database (111) configured to store roadmap data used for route search;
    a navigation-route-search section (130) configured to search a route starting from a departure point and reaching a destination by referring to the master map database (111); and
    a preparatory-route-search section (140) configured to search a preparatory route starting from a node existing in the vicinity of the route searched by the navigation-route-search section (130) and reaching the destination, **characterized in that**
    the preparatory-route-search section (140) is further configured to perform the steps of:

        obtaining information on nodes constituting the route searched by the navigation-route-search section (130) from the master map database (111);
        defining an area for a node of the route, the size of which corresponds to the risk of the vehicle deviating from the route at said node, in which the preparatory route is provided based on a branch number and a distribution rate, the branch number, being included in the information on the nodes, being the number of routes branching from the route, the distribution rate being an index relating to a traffic amount of the road links dividing from each node;
        retrieving the node existing in the defined area from the master map database (111);
        searching a route starting from the retrieved node and reaching the destination from the master map database (111); and setting said route as the preparatory route.

2. The route-search server according to Claim 1, wherein
    the preparatory-route-search section (140) is further configured to perform the steps of:

        dividing the route searched by the navigation-route-search section (130);
        defining an area having a border line, which the vehicle reaches for a travelling cost, the traveling cost being obtained between two neighboring points each dividing the route searched by the navigation-route-search section (130);
        retrieving a node existing in the defined area from the master map database (111);
        searching a route starting from the retrieved node and reaching the destination from the master map database (111); and
        setting said route as the preparatory route.

3. The route-search server according to Claim 2, wherein
    the preparatory-route-search section (140) is further configured to perform:

        dividing the route searched by the navigation-route-search section (130);
        setting a predetermined travelling cost based on the travelling costs necessary for navigating the vehicle from each point dividing the route searched by the navigation-route-search section (130) to the destination; and
        setting a route as the preparatory route, the set route allowing the vehicle to reach the destination by a travelling cost lower than the predetermined value.

4. A route-search system (7) for navigating a vehicle, the route-search system comprising a navigation device (2) and the route-search server (1) according to claim 1 linked to the navigation device (2) via a communication network (3), wherein the route-search server (1) further comprises:

    a communication section (12) configured to transmit route search information to the navigation device (2) and to receive the route-request information from the navigation device (2); and a route information transmitter section (150) configured to transmit information on the route searched by the navigation-route-search section (130) and information on the preparatory route searched by the preparatory-route-search section (140) to the navigation device (2) and wherein
    the navigation device (2) comprises:

a satellite radiowave receiver section (26) configured to receive satellite radiowaves used for positioning purpose;

a position information acquisition section (210) configured to calculate a current position of a vehicle by using the satellite radiowaves received by the satellite radiowave receiver section (26);

a communication section (22) configured to transmit the route-request information to the route-search server (1) and to receive the route search information from the route-search server (1); a route information acquisition section (240) configured to obtain the route information from the route-search server (1) via the communication section (22);

a storage section (21) configured to store therein the information on the route searched by the navigation-route-search section (130) and included in the route information obtained by the route information acquisition section (240), the information on the preparatory route, and a roadmap database (213) including roadmap data;

a navigation controller section (260) configured to navigate the vehicle on the route searched from the route information stored in the storage section (21); and

a route-search section (250) configured to search the preparatory route that is the closest to the current position of the vehicle by using the information stored in the storage section (21) if the navigation controller section (260) determines that the vehicle has deviated from the route searched by the route-search section (250) by considering the current position of the vehicle calculated by the position information acquisition section (210).

5. The route-search system according to Claim 4, wherein
the navigation-route-search section (130) included in the route-search server (1) is further configured to perform selecting a plurality of nodes from the nodes constituting the route searched by the navigation-route-search section (130); and
setting the selected nodes as group of route points which will constitute the route searched by the navigation-route-search section (130), wherein
the preparatory-route-search section (140) is further configured to perform:

selecting a plurality of nodes from the nodes constituting the preparatory route searched by the preparatory-route-search section (140); and
setting the selected nodes as group of route points which will constitute the preparatory route, wherein
the route information transmitter section (150) is configured to transmit the route information including the group of route points constituting the route searched by the navigation-route-search section (130) and the group of route points constituting the preparatory route to the navigation device (2), and wherein
the route-search section (250) included in the navigation device (2) is further configured to perform:

obtaining the plurality of nodes included in the group of route points constituting the route searched by the navigation-route-search section (130);
retrieving routes connecting the plurality of nodes from the roadmap database (213); and
combining the navigation routes to create said route;
obtaining the plurality of nodes included in the group of route points constituting the preparatory route;
retrieving routes connecting the plurality of nodes from the roadmap daatabase (213); and
combining the navigation routes to create the preparatory route.

6. A navigation device (2) connectible to the route-search server (1) according to claim 1 via a communication network (3), the navigation device (2) comprising:

a position information acquisition section (210) configured to calculate a current position of a vehicle;
a departure-point-setting section (220) configured to set the departure point;
a destination-setting section (220) configured to set the destination;
a transmitter section (230) configured to transmit the departure point set by the departure-point-setting section (220) and the destination set by the destination-setting section (220) to the server(1);
a route information acquisition section (240) configured to receive the route starting from the departure point and reaching the destination and to receive the preparatory route starting from a departure point which is different from the departure point of the received route; and
a route-selecting section (260) configured to select one of the route and the preparatory route received by the route information acquisition section (240), the selected route being the closest to the current position of the vehicle calculated by the position information acquisition section (210), the selected route being set as a route on which the vehicle is to be navigated, wherein the route-selecting section (260) further comprises:

a deviation-determining section (260) configured to determine whether the vehicle has deviated from the route which the route information acquisition section (240) received by considering the current position of the vehicle calculated by the position information acquisition section (210); and

a rerouting section (260) configured to reroute the vehicle on the preparatory route which the route information acquisition section (240) received if the deviation-determining section (260) determines that the vehicle has deviated from the route, wherein the vehicle is rerouted based on a supplementary route searched by a supplementary-route-search section (251), the supplementary route being between the current position of the vehicle and the preparatory route.

**Patentansprüche**

1. Routensuchserver (1), der in einem Routensuchsystem, das auch eine Navigationsvorrichtung (2) umfasst, verwendet werden kann, wobei der Server (1) über ein Kommunikationsnetz (3) mit der Navigationsvorrichtung (2) verbunden werden kann, wobei der Routensuchserver (1) Folgendes umfasst:

einen Speicherabschnitt (11), der eine Master-Kartendatenbank (111), die konfiguriert ist, Straßenkartendaten, die für die Routensuche verwendet werden, zu speichern, enthält;
einen Abschnitt (130) zur Suche nach Navigationsrouten, der konfiguriert ist, eine Route, die an einem Ausgangspunkt beginnt und durch Bezugnahme auf die Master-Kartendatenbank (111) ein Ziel erreicht, zu suchen; und
einen Abschnitt (140) zur Suche nach Vorbereitungsrouten, der konfiguriert ist, eine Vorbereitungsroute, die an einem Knoten, der in der Nähe der Route, die durch den Abschnitt (130) zur Suche nach Navigationsrouten gesucht worden ist, vorhanden ist, beginnt und das Ziel erreicht, zu suchen, **dadurch gekennzeichnet, dass** der Abschnitt (140) zur Suche nach Vorbereitungsrouten ferner konfiguriert ist, die folgenden Schritte durchzuführen:

Erhalten von Informationen über Knoten, die die Route, die durch den Abschnitt (130) zur Suche nach Navigationsrouten gesucht worden sind, bilden, von der Master-Kartendatenbank (111);
Definieren eines Bereichs für einen Knoten der Route, dessen Größe dem Risiko, dass das Fahrzeug an dem Knoten von der Route abweicht, entspricht, wobei die Vorbereitungsroute anhand einer Zweigzahl und einer Verteilungsrate bereitgestellt wird, wobei die Zweigzahl, die in den Informationen über die Knoten enthalten ist, die Anzahl von Routen, die von der Route abzweigen, ist, wobei die Verteilungsrate eine Kennzahl, die sich auf das Verkehrsaufkommen der Straßenverbindungen, die sich von jedem Knoten teilen, bezieht, ist;
Abrufen des Knotens, der in dem definierten Bereich vorhanden ist, aus der Master-Kartendatenbank (111);
Suchen nach einer Route, die von dem abgerufenen Knoten beginnt, und das Ziel erreicht, aus der Master-Kartendatenbank (111); und
Einstellen der Route als die Vorbereitungsroute.

2. Routensuchserver nach Anspruch 1, wobei
der Abschnitt (140) zur Suche nach Vorbereitungsrouten ferner konfiguriert ist, die folgenden Schritte durchzuführen:

Unterteilen der Route, die durch den Abschnitt (130) zur Suche nach Navigationsrouten gesucht wird;
Definieren eines Bereichs, der eine Grenzlinie, die das Fahrzeug für Reisekosten erreicht, besitzt, wobei die Reisekosten zwischen zwei benachbarten Punkten, die die Route, die durch den Abschnitt (130) zur Suche nach Navigationsrouten gesucht werden, jeweils unterteilen, erhalten werden;
Abrufen eines Knotens, der in dem definierten Bereich vorhanden ist, aus der Master-Kartendatenbank (111);
Suchen nach einer Route, die bei dem abgerufenen Knoten beginnt und das Ziel erreicht, aus der Master-Kartendatenbank (111); und
Einstellen der Route als die Vorbereitungsroute.

3. Routensuchserver nach Anspruch 2, wobei
der Abschnitt (140) zur Suche nach Vorbereitungsrouten ferner konfiguriert ist, Folgendes durchzuführen:

Unterteilen der Route, die durch den Abschnitt (130) zur Suche nach Navigationsrouten gesucht worden ist; Einstellen vorgegebener Reisekosten anhand der Reisekosten, die zum Navigieren des Fahrzeugs von jedem Punkt, der die Route, die durch den Abschnitt (130) zur Suche nach Navigationsrouten gesucht worden ist, unterteilt, zu dem Ziel nötig sind; und Einstellen einer Route als die Vorbereitungsroute, wobei die eingestellte Route dem Fahrzeug ermöglicht, das Ziel mit Reisekosten, die niedriger als der vorgegebene Wert sind, zu erreichen.

4. Routensuchsystem (7) zum Navigieren eines Fahrzeugs, wobei das Routensuchsystem eine Navigationsvorrichtung (2) und den Routensuchserver (1) nach Anspruch 1, der über ein Kommunikationsnetz (3) mit der Navigationsvorrichtung (2) verbunden ist, umfasst, wobei der Routensuchserver (1) ferner Folgendes umfasst:

einen Kommunikationsabschnitt (12), der konfiguriert ist, Routensuchinformationen an die Navigationsvorrichtung (2) zu senden und die Routenanfrageinformationen von der Navigationsvorrichtung (2) zu empfangen; und einen Routeninformationensenderabschnitt (150), der konfiguriert ist, Informationen über die Route, die durch den Abschnitt (130) zur Suche nach Navigationsrouten gesucht worden ist, und Informationen über die Vorbereitungsroute, die durch den Abschnitt (140) zur Suche nach Vorbereitungsrouten gesucht worden ist, an die Navigationsvorrichtung (2) zu senden, und wobei die Navigationsvorrichtung (2) Folgendes umfasst:

eine Satellitenfunkwellenempfangsstation (26), die konfiguriert ist, Satellitenfunkwellen, die für einen Positionierungszweck verwendet werden, zu empfangen; einen Erfassungsabschnitt (210) für Positionsinformationen, der konfiguriert ist, eine aktuelle Position eines Fahrzeugs unter Verwendung der Satellitenradiowellen, die durch die Satellitenfunkwellenempfangsstation (26) empfangen worden sind, zu berechnen; einen Kommunikationsabschnitt (22), der konfiguriert ist, die Routenanfrageinformationen an den Routensuchserver (1) zu senden und die Routensuchinformationen von dem Routensuchserver (1) zu empfangen; einen Erfassungsabschnitt (240) für Routeninformationen, der konfiguriert ist, die Routeninformationen von dem Routensuchserver (1) über den Kommunikationsabschnitt (22) zu erhalten; einen Speicherabschnitt (21), der konfiguriert ist, darin die Informationen über die Route, die durch den Abschnitt (130) zur Suche nach Navigationsrouten gesucht worden sind und die in den Routeninformationen, die durch den Erfassungsabschnitt (240) für Routeninformationen erhalten worden sind, enthalten sind, die Informationen über die Vorbereitungsroute und eine Straßenkartendatenbank (213), die Straßenkartendaten enthält, zu speichern; einen Navigationssteuereinheitenabschnitt (260), der konfiguriert ist, das Fahrzeug auf der Route, die aus den Routeninformationen, die in dem Speicherabschnitt (21) gespeichert sind, gesucht worden ist, zu navigieren; und einen Routensuchabschnitt (250), der konfiguriert ist, die Vorbereitungsroute, die sich am nächsten bei der aktuellen Position des Fahrzeugs befindet, unter Verwendung der Informationen, die in dem Speicherabschnitt (21) gespeichert sind, zu suchen, falls der Navigationssteuereinheitenabschnitt (260) durch Berücksichtigen der aktuellen Position des Fahrzeugs, die durch den Erfassungsabschnitt (210) für Positionsinformationen berechnet worden ist, bestimmt, dass das Fahrzeug von der Route, die durch den Routensuchabschnitt (250) gesucht worden ist, abgewichen ist.

5. Routensuchsystem nach Anspruch 4, wobei der Abschnitt (130) zur Suche nach Navigationsrouten, der in dem Routensuchserver (1) enthalten ist, ferner konfiguriert ist, das Auswählen mehrerer Knoten aus den Knoten, die die Route, die durch den Abschnitt (130) zur Suche nach Navigationsrouten gesucht worden ist, bilden; und das Einstellen der ausgewählten Knoten als eine Gruppe von Routenpunkten, die die Route, die durch den Abschnitt (130) zur Suche nach Navigationsrouten gesucht worden ist, bilden werden, durchzuführen, wobei der Abschnitt (140) zur Suche nach Vorbereitungsrouten ferner konfiguriert ist, Folgendes durchzuführen:

Auswählen mehrerer Knoten aus den Knoten, die die Vorbereitungsroute. die durch den Abschnitt (240) zur Sache nach Vorbereitungsrouten gesucht worden ist, bilden; und Einstellen der ausgewählten Knoten als eine Gruppe von Routenpunkten, die die Vorbereitungsroute bilden werden, wobei der Routeninformationensenderabschnitt (150) konfiguriert ist, die Routeninformationen, die die Gruppe von Routenpunkten, die die Route, die durch den Abschnitt (130) zur Suche nach Navigationsrouten gesucht worden ist, bilden, und die Gruppe von Routenpunkten, die die Vorbereitungsroute bilden, enthalten, an die Navigationsvorrichtung (2) zu senden, und wobei

der Routensuchabschnitt (250), der in der Navigationsvorrichtung (2) enthalten ist, ferner konfiguriert ist, Folgendes durchzuführen:

Erhalten der mehreren Knoten, die in der Gruppe von Routenpunkten, die die Route, die durch den Abschnitt (130) zur Suche nach Navigationsrouten gesucht worden ist, bilden, enthalten sind;
Abrufen von Routen, die die mehreren Knoten aus der Straßenkartendatenbank (213) verbinden; und
Kombinieren der Navigationsrouten, um die Route zu erstellen;
Erhalten der mehreren Knoten, die in der Gruppe von Routenpunkten, die die Vorbereitungsroute bilden, enthalten sind;
Abrufen von Routen, die die mehreren Knoten aus der Straßenkartendatenbank (213) verbinden; und
Kombinieren der Navigationsrouten, um die Vorbereitungsroute zu erstellen.

6. Navigationsvorrichtung (2), die mit dem Routensuchserver (1) nach Anspruch 1 über ein Kommunikationsnetz (3) verbunden werden kann, wobei die Navigationsvorrichtung (2) Folgendes umfasst:

einen Erfassungsabschnitt (210) für Positionsinformationen, der konfiguriert ist, eine aktuelle Position eines Fahrzeugs zu berechnen;
einen Abschnitt (220) zum Einstellen von Ausgangspunkten, der konfiguriert ist, den Ausgangspunkt einzustellen;
einen Abschnitt (220) zum Einstellen von Zielen, der konfiguriert ist, das Ziel einzustellen;
einen Senderabschnitt (230), der konfiguriert ist, den Ausgangspunkt, der durch den Abschnitt (220) zum Einstellen von Ausgangspunkten eingestellt worden ist, und das Ziel, das durch den Abschnitt (220) zum Einstellen von Zielen eingestellt worden ist, an den Server (1) zu senden;
einen Erfassungsabschnitt (240) für Routeninformationen, der konfiguriert ist, die Route, die an dem Ausgangspunkt beginnt und das Ziel erreicht, zu empfangen und die Vorbereitungsroute, die an einem Ausgangspunkt, der sich von dem Ausgangspunkt der empfangenen Route unterscheidet, beginnt, zu empfanganz; und
einen Routenauswahlabschnitt (260), der konfiguriert ist, entweder die Route oder die Vorbereitungsroute, die durch den Erfassungsabschnitt (240) für Routeninformationen empfangen Worden ist, auszuwählen,
wobei die ausgewählte Route zu der aktuellen Position des Fahrzeugs, die durch den Erfassungsabschnitt (210) für Positionsinformationen berechnet worden ist, am nächsten liegt, wobei die ausgewählte Route als eine Route, auf der das Fahrzeug navigiert werden soll, eingestellt ist,
wobei der Routenauswahtabschnitt (260) ferner Folgendes umfasst:

einen Abweichungsbestimmungsabschnitt (260), der konfiguriert ist, zu bestimmen, ob das Fahrzeug von der Route, die der Erfassungsabschnitt (240) für Routeninformationen durch Berücksichtigen der aktuellen Position des Fahrzeugs, die durch den Erfassungsabschnitt (210) für Positionsinformationen berechnet worden ist, empfangen hat, abgewichen ist; und
einen Umleitungsabschnitt (260), der konfiguriert ist, das Fahrzeug auf die Vorbereitungsroute, die der Erfassungsabschnitt (240) für Routeninformationen empfangen hat, umzuleiten, falls der Abweichungsbestimmungsabschnitt (260) bestimmt, dass das Fahrzeug von der Route abgewichen ist, wobei das Fahrzeug anhand einer zusätzlichen Route, die durch einen Abschnitt (251) zur Suche nach zusätzlichen Routen gesucht worden ist, umgeleitet wird, wobei die zusätzliche Route zwischen der aktuellen Position des Fahrzeugs und der Vorbereitungsroute liegt.

## Revendications

1. Serveur de recherche d'itinéraire (1) utilisable dans un système de recherche d'itinéraire comprenant également un dispositif de navigation (2), ledit serveur (1) pouvant être connecté audit dispositif de navigation (2) via un réseau de communication (3), le serveur de recherche d'itinéraire (1) comprenant :

une section de stockage (11) incluant une base de données cartographiques maître (111) configurée pour stocker des données de carte routière utilisées pour la recherche d'itinéraire;
une section de recherche d'itinéraire de navigation (130) configurée pour rechercher un itinéraire partant d'un point de départ et atteignant une destination en se référant à la base de données cartographiques maître (111) ; et
une section de recherche d'itinéraire préparatoire (140) configurée pour rechercher un itinéraire préparatoire partant d'un noeud existant au voisinage de l'itinéraire recherché par la section de recherche d'itinéraire de navigation (130) et atteignant la destination,

**caractérisé en ce que**

la section de préparation d'itinéraire préparatoire (140) est en outre configurée pour exécuter les étapes consistant à :

obtenir des informations sur des noeuds constituant l'itinéraire recherché par la section de recherche d'itinéraire de navigation (130) à partir de la base de données cartographiques maître (111) ;

définir une zone pour un noeud de l'itinéraire, dont la taille correspond au risque pour le véhicule de dévier de l'itinéraire audit noeud, dans laquelle l'itinéraire préparatoire est fourni sur la base d'un nombre de bifurcations et d'un taux de distribution, le nombre de bifurcations, qui est inclus dans les informations sur les noeuds, étant le nombre d'itinéraires bifurquant à partir de l'itinéraire, le taux de distribution étant un indice relatif à une quantité de trafic des liaisons routières se divisant à partir de chaque noeud ;

récupérer le noeud existant dans la zone définie à partir de la base de données cartographiques maître (111) ;

rechercher un itinéraire partant du noeud récupéré et atteignant la destination à partir de la base de données cartographiques maître (111) ; et

définir ledit itinéraire en tant qu'itinéraire préparatoire.

**2.** Serveur de recherche d'itinéraire selon la revendication 1, dans lequel

la section de recherche d'itinéraire préparatoire (140) est en outre configurée pour exécuter les étapes consistant à :

diviser l'itinéraire recherché par la section de recherche d'itinéraire de navigation (130)

définir une zone ayant une ligne frontière que le véhicule atteint pour un coût de déplacement, le coût de déplacement étant obtenu entre deux points voisins divisant chacun l'itinéraire recherché par la section de recherche d'itinéraire de navigation (130) ;

récupérer un noeud existant dans la zone définie à partir de la base de données cartographiques maître (111) ;

rechercher un itinéraire partant du noeud récupéré et atteignant la destination à partir de la base de données cartographiques maître (111) ; et

définir ledit itinéraire en tant qu'itinéraire préparatoire.

**3.** Serveur de recherche d'itinéraire selon la revendication 2, dans lequel

la section de recherche d'itinéraire préparatoire (140) est en outre configurée pour exécuter les étapes consistant à diviser l'itinéraire recherché par la section de recherche d'itinéraire de navigation (130) ;

définir un coût de déplacement prédéterminé sur la base des coûts de déplacement nécessaires pour guider le véhicule à partir de chaque point divisant l'itinéraire recherché par la section de recherche d'itinéraire de navigation (130) ; et

définir un itinéraire en tant qu'itinéraire préparatoire, l'itinéraire défini permettant au véhicule d'atteindre la destination à un coût de déplacement inférieur à la valeur prédéterminée.

**4.** Système de recherche d'itinéraire (7) pour guider un véhicule, le système de recherche d'itinéraire comprenant un dispositif de navigation (2) et le serveur de recherche d'itinéraire (1) selon la revendication 1 connecté au dispositif de navigation (2) via un réseau de communication (3), dans lequel

le serveur de recherche d'itinéraire (1) comprend en outre :

une section de communication (12) configurée pour transmettre les informations de recherche d'itinéraire au dispositif de navigation (2) et pour recevoir les informations de demande d'itinéraire provenant du dispositif de navigation (2) ; et

une section d'émission d'informations d'itinéraire (150) configurée pour transmettre des informations sur l'itinéraire recherché par la section de recherche d'itinéraire de navigation (130) et des informations sur l'itinéraire préparatoire recherché par la section de recherche d'itinéraire préparatoire (140) au dispositif de navigation (2), et dans lequel

le dispositif de navigation (2) comprend :

une section de réception d'ondes radioélectriques par satellite (26) configurée pour recevoir des ondes radioélectriques par satellite utilisées à des fins de positionnement ;

une section d'acquisition d'informations de position (210) configurée pour calculer une position actuelle d'un véhicule en utilisant les ondes radioélectriques par satellite reçues par la section de réception d'ondes radioélectriques par satellite (26) ;
une section de communication (22) configurée pour transmettre les informations de demande d'itinéraire au serveur de recherche d'itinéraire (1) et pour recevoir les informations de recherche d'itinéraire depuis le serveur de recherche d'itinéraire (1) ;
une section d'acquisition d'informations d'itinéraire (240) configurée pour obtenir les informations d'itinéraire à partir du serveur de recherche d'itinéraire (1) via la section de communication (22) ;
une section de stockage (21) configurée pour stocker les informations sur l'itinéraire recherché par la section de recherche d'itinéraire de navigation (130) et incluses dans les informations d'itinéraire obtenues par la section d'acquisition d'informations d'itinéraire (240), les informations sur l'itinéraire préparatoire, et une base de données de cartes routières (213) incluant des données de carte routière ;
une section de commande de navigation (260) configurée pour guider le véhicule sur l'itinéraire recherché à partir des informations d'itinéraire stockées dans la section de stockage (21) ; et
une section de recherche d'itinéraire (250) configurée pour rechercher l'itinéraire préparatoire le plus proche de la position actuelle du véhicule en utilisant les informations stockées dans la section de stockage (21) si la section de commande de navigation (260) détermine que le véhicule a dévié de l'itinéraire recherché par la section de recherche d'itinéraire (250) en considérant la position actuelle du véhicule calculée par la section d'acquisition d'informations de position (210).

5. Système de recherche d'itinéraire selon la revendication 4, dans lequel:

la section de recherche d'itinéraire de navigation (130) incluse dans le serveur de recherche d'itinéraire (1) est en outre configurée pour :

sélectionner une pluralité de noeuds parmi les noeuds constituant l'itinéraire recherché par la section de recherche d'itinéraire de navigation (130) ; et
définir les noeuds sélectionnés en tant que groupe de points d'itinéraire qui constitueront l'itinéraire recherché par la section de recherche d'itinéraire de navigation (130), dans lequel

la section de recherche d'itinéraire préparatoire (140) est en outre configurée pour :

sélectionner une pluralité de noeuds parmi les noeuds constituant l'itinéraire préparatoire recherché par la section de recherche d'itinéraire préparatoire (140) ; et
définir les noeuds sélectionnées en tant que groupe de points d'itinéraire qui constitueront l'itinéraire préparatoire, dans lequel

la section d'émission d'informations d'itinéraire (150) est configurée pour transmettre les informations d'itinéraire incluant le groupe de points d'itinéraire constituant l'itinéraire recherche par la section de recherche d'itinéraire de navigation (130) et le groupe de points d'itinéraire constituant l'itinéraire préparatoire au dispositif de navigation (2), et dans lequel
la section de recherche d'itinéraire (250) incluse dans le dispositif de navigation (2) est en outre configurée pour :

obtenir la pluralité de noeuds inclus dans le groupe de points d'itinéraire constituant l'itinéraire recherché par la section de recherche d'itinéraire de navigation (130) ;
récupérer des itinéraires reliant la pluralité de noeuds à partir de la base de données de cartes routières (213) ; et
combiner les itinéraires de navigation pour créer ledit itinéraire ;

obtenir la pluralité de noeuds inclus dans le groupe de points d'itinéraire constituant l'itinéraire préparatoire ;
récupérer des itinéraires reliant la pluralité de noeuds à partir de la base de données de cartes routières (213) ; et
combiner les itinéraires de navigation pour créer l'itinéraire préparatoire.

6. Dispositif de navigation (2) pouvant être connecté au serveur de recherche d'itinéraire (1) selon la revendication 1 via un réseau de communication (3), le dispositif de navigation (2) comprenant :

une section d'acquisition d'informations de position (210) configurée pour calculer une position actuelle d'un véhicule ;
une section de définition de point de départ (220) configurée pour définir le point de départ ;
une section de définition de destination (220) configurée pour définir la destination ;

une section d'émission (230) configurée pour transmettre le point de départ défini par la section de définition de point de départ (220) et la destination définie par la section de définition de destination (220) au serveur (1) ;

une section d'acquisition d'informations d'itinéraire (240) configurée pour recevoir l'itinéraire partant du point de départ et atteignant la destination et pour recevoir l'itinéraire préparatoire partant d'un point de départ qui est différent du point de départ de l'itinéraire reçu ; et

une section de sélection d'itinéraire (260) configurée pour sélectionner soit l'itinéraire, soit l'itinéraire préparatoire reçus par la section d'acquisition d'informations d'itinéraire (240), l'itinéraire sélectionné étant le plus proche de la position actuelle du véhicule calculée par la section d'acquisition d'informations de position (210), l'itinéraire sélectionné étant défini en tant qu'itinéraire sur lequel le véhicule doit être guidé,

dans lequel la section de sélection d'itinéraire (260) comprend en outre :

une section de détermination de déviation (260) configurée pour déterminer si le véhicule a dévié de l'itinéraire que la section d'acquisition d'informations d'itinéraire (240) a reçu en considérant la position actuelle du véhicule calculée par la section d'acquisition d'informations de position (210) ; et

une section de redirection (260) pour rediriger le véhicule sur l'itinéraire préparatoire que la section d'acquisition d'informations d'itinéraire (240) a reçu si la section de détermination de déviation (260) détermine que le véhicule a dévié de l'itinéraire, dans lequel le véhicule est redirigé sur la base d'un itinéraire supplémentaire recherché par une section de recherche d'itinéraire supplémentaire (251), l'itinéraire supplémentaire étant entre la position actuelle du véhicule et l'itinéraire préparatoire.

FIG. 1

EP 2 270 432 B1

FIG. 2

( 1 SERVER DEVICE )

RECEIVE REQUEST FOR NEW ROUTE TO BE SEARCHED — S101

SEARCH NEW ROUTE — S102

REQUEST FOR SEARCHING AUXILIARY ROUTE? — S103 → No

Yes

DEFINE AREA IN WHICH AUXILIARY ROUTE WILL BE PROVIDED — S104

SET REFERENCE COST — S105

PROVIDE AUXILIARY ROUTE — S106

ALL NODES ARE PROCESSED? — S107

No

Yes

TRANSMIT INFORMATION OF SEARCHED ROUTE — S108

( END )

( 2 NAVIGATION DEVICE )

ENTER DESTINATION AND OTHER SEARCH TERMS — S201

CONNECT TO SERVER DEVICE? — S202 → No

Yes

TRANSMIT REQUEST FOR SEARCHING NEW ROUTE — S203

SEARCH A NEW ROUTE — S204

RECEIVE INFORMATION REGARDING AUXILIARY ROUTE — S205

NAVIGATE VEHICLE — S206

VEHICLE REACHED DESTINATION? — S207 → Yes

No

VEHICLE DEVIATE FROM NAVIGATION ROUTE? — S208

No

Yes

INFORMATION ON AUXILIARY ROUTE STORED? — S209 → No

Yes

NAVIGATE VEHICLE BASED ON AUXILIARY ROUTE — S210

( END )

EP 2 270 432 B1

# FIG. 3

DEFINE AREA IN WHICH AUXILIARY
ROUTE WILL BE PROVIDED (FROM S104)

DIVIDE ROUTE SEARCHED — S301

RETRIEVE ONE OF DIVIDING POINTS $P_i$ — S302

SET AREA $A_i$ REACHED FROM STARTING
POINT OF A DIVIDED ROUTE FOR REFERENCE
COST $T_i$ OF A DIVIDED ROUTE — S303

DEFINE AREA $B_i$ IN WHICH VEHICLE STARTING
THE OTHER ONE OF TWO DIVIDING POINTS $P_i$ AND
$P_i+1$ CAN REACH ONE OF DIVIDING POINTS — S304

DEFINE AREA $C_i$ IN WHICH AREAS $A_i$ AND $B_i$
OVERLAP AND IN WHICH
AUXILIARY ROUTE WILL BE PROVIDED — S305

S306
PROVIDE AREAS
$C_{1 \text{ TO } n-1}$ TO ALL DIVIDING POINTS?

No

Yes

DEFINE AREA INCLUDING AREAS $C_{1 \text{ TO } n-1}$ AS AREA
INTO WHICH AUXILIARY ROUTE WILL BE PROVIDED — S307

END

EP 2 270 432 B1

FIG. 4

# FIG. 5

DEFINE AREA IN WHICH AUXILIARY
ROUTE WILL BE PROVIDED (FROM S104)

RETRIEVE NODES $P_i$ CONSTITUTING NAVIGATION ROUTE — S501

RETRIEVE BRANCHING NUMBER AND DISTRIBUTION RATE — S502

$C_i$ = REFERENCE RADIUS $r$ × DIVIDING NUMBER × DIVERGENCE RATE — S503

No — AUXILIARY-ROUTE-PROVIDED AREAS SET TO ALL NODES? — S504

Yes

DEFINE AREA INCLUDING AREAS $C_1$ TO $C_{n-1}$ AS AREA
INTO WHICH AUXILIARY ROUTE WILL BE PROVIDED — S505

END

# FIG. 6

$L_2$

$L_1$

$L_3$

$P$

$L_{in}$

FIG. 7

# FIG. 8

SET REFERENCE TURNAROUND
COST (FROM S105)

RETRIEVE STARTING POINT $P_i$ AND
ENDING POINT $P_{i+1}$ DROM DIVIDED ROUTE $\quad$ S801

SET AREA $E_{Pi}$ REACHED FOR REFERENCE TRAVELLING
COST $T_{P(i+1)}$ BETWEEN STARTING POINT $P_i$ AND DESTINATION $\quad$ S802

DEFINE AREA $E_{P(i+1)}$ WHICH CAN BE REACHED FROM
DESTINATION BY TURNAROUND COST $T_{P(i+1)}$
WHERE AREA $E_{P(i+1)}$ BEING DEFINED BY
TURNAROUND COST $T_{P(i+1)}$ $\quad$ S803

LIMIT AREA TO BE BETWEEN THE BORDER LINE OF
AREA $E_{P(i)}$ AND BORDER LINE OF AREA $E_{P(i+1)}$ AND TO
BE WITHIN AREA IN WHICH A AUXILIARY ROUTE
WILL BE PROVIDED $\quad$ S804

SET REFERENCE TURNAROUND COST TO AREA
LIMITED IN S804 WHERE REFERENCE TURN
AROUND COST SATISFIES MATHEMATIAL EXPRESSION OF
REFERENCE TURNAROUND COST $\leq T_{P(i)} + \alpha \cdot T_c$ $\quad$ S805

S806
ENDING POINT OF
DIVIDED ROUTE COINCIDES WITH
DESTINATION?

No

Yes

END

FIG. 9

# FIG. 10

```
        PROVIDE AUXILIARY ROUTE
             (FROM S106)
                  │
                  ▼
┌─────────────────────────────────────┐
│         REFER TO AREA IN WHICH       │──S1001
│    AUXILIARY ROUTE WILL BE PROVIDED  │
└─────────────────────────────────────┘
                  │
                  ▼
┌─────────────────────────────────────┐
│     RETRIEVE ALLL NODES EXISTING IN  │──S1002
│       AREA REFERRED TO IN S1001      │
└─────────────────────────────────────┘
                  │
                  ▼
┌─────────────────────────────────────┐
│   SELECT ONE OF NODES RETRIEVED IN S1002 │──S1003
└─────────────────────────────────────┘
                  │
                  ▼
┌─────────────────────────────────────┐
│    SET TRAVELLING COST CONDITION TO NODE │──S1004
└─────────────────────────────────────┘
                  │
                  ▼
┌─────────────────────────────────────┐
│         SEARCH ROUTE CONNECTING      │──S1005
│      SELECTED NODE TO DESTINATION    │
└─────────────────────────────────────┘
                  │
                  ▼
              ╱───────────╲              S1006
     No    ╱   DETERMINE THAT    ╲
    ◄─────╱ COST FOR NAVIGATING VEHICLE TO DESTINATION EXCEEDS ╲
          ╲    PREDETERMINED TURNAROUND COST?   ╱
              ╲───────────╱
                  │ Yes
                  ▼
┌─────────────────────────────────────┐
│    SET SEARCHED ROUTE AS AUXILIARY ROUTE │──S1007
└─────────────────────────────────────┘
                  │
                  ▼
              ╱───────────╲              S1008
     No    ╱                ╲
    ◄─────╱  ALL NODES ARE PROCESSED?  ╲
          ╲                ╱
              ╲───────────╱
                  │ Yes
                  ▼
                 END
```

FIG. 11

EP 2 270 432 B1

FIG. 12

EP 2 270 432 B1

PROCESS OF S210 SEARCHING ROUTE BASED ON INFORMATION REGARDING AUXILIARY ROUTE

SELECT AUXILIARY ROUTE HAVING NODE CLOSEST TO CURRENT POTITION OF VEHICLE — S1201

SEARCH ROUTE CONNECTING CURRENT POSITION TO NODE CLOSEST TO CURRENT POSITION AS TEMPORARY DESTINATION — S1202

S1203 DETERMINE WHETHER TURNAROUND COST FOR MOVING VEHICLE FROM CURRENT POSITION TO TEMPORARY DESTINATION WILL EXCEED PREDETERMINED VALUE?

No

SET ROUTE OBTAINED BY COMBINING SUPPLEMENTARY ROUTE WITH AUXILIARY ROUTE AS NEW NAVIGATION ROUTE — S1204

Yes

NOTIFY USER THAT NAVIGATION DEVICE CAN NO LONGER CONTINUE TO NAVIGATE VEHICLE TO THE DESTINATION WITH CURRENTLY NAVIGATED ROUTE — S1205

S1206 DETERMINE WHETHER TO REQUEST SERVER DEVICE FOR NEW ROUTE ?

No

Yes

TRANSMIT REQUEST FOR SEARCHING NEW ROUTE — S1207

S1208 MONITOR WHETHER COMMUNICATION ERROR OCCURS?

No → S205 OF FIG. 2

Yes

S1209 DETERMINE WHETHER NUMBER OF TRYING TO RESTORE COMMUNICATION EXCEEDS PREDETERMINED VALUE BETWEEN SERVER DEVICE AND NAVIGATION DEVICE?

No

Yes

SEARCH ROUTE — S1210

TO S206 SHOWN IN FIG. 2

FIG. 13

# FIG. 14

PROCESS OF SEARCHING NEW ROUTE
USING GROUPS OF INTERMEDIATE POINTS

REFER TO ONE OF POINTS INCLUDED IN GROUP OF INTERMEDIATE POINTS ─S1401

RETRIEVES ALL INTERMEDIATE POINTS
EXISTING IN GROUP OF INTERMEDIATE POINTS ─S1402

─S1404

SEARCH SUPPLEMENTARY ROUTE
CONNECTING INTERMEDIATE POINT SELECTED IN
STEP S1403 TO ITS NEXT INTERMEDIATE POINT

SELECT ONE OF ─S1403
RETRIEVED INTERMEDIATE POINTS AND
DETERMINES WHETHER SELECTED POINT COINCIDES WITH
THE LAST ONE OF SEQUENTIALLY DISPOSED INTERMEDIATE
POINTS INCLUDED IN GROUP OF
INTERMEDIATE POINTS?

No

Yes ─S1405

SEARCH SUPPLEMENTARY ROUTE CONNECTING THE LAST ONE OF
SEQUENTIALLY ARRANGED INTERMEDIATE POINTS TO DESTINATION

─S1406

PRODUCE CANDIDATE ROUTE BY
COMBINING SUPPLEMENTARY ROUTES

CONTINUED FROM
"NO" OF S1410

CONTINUED TO S1407

CONTINUED
TO FIG. 14

CONTINUED FROM
S1406 OF FIG. 14

S1407

DETERMINE WHETHER GROUP OF
INTERMEDIATE POINTS REFERRED TO IN STEP S1401 COINCIDE
WITH GROUP OF INTERMEDIATE POINTS USED FOR SEARCHING
THE CANDIDATE ROUTE?

No

Yes

S1408

STORE CANDIDATE
ROUTE AS NEW ROUTE

S1409

STORE INFORMATION REGARDING GROUP OF
INTERMEDIATE POINTS REFERRED TO
IN STEP S1401 AS AUXILIARY ROUTE

S1410

DETERMINE WHETHER
STEPS S1403 THROUGH S1408 HAVE BEEN CONDUCTED
TO ALL GROUPS OF INTERMEDIATE POINTS?

No

Yes

END

FIG. 15

EP 2 270 432 B1

# FIG. 16

```
        ┌─────────────────────────────┐
        │   PROCESS OF DIVIDING        │
        │     AUXILIARY ROUTE          │
        └─────────────────────────────┘
                      │
                      ▼
    ┌──────────────────────────────────────────┐
    │ REFER TO INFORMATION REGARDING AUXILIARY ROUTE │──S1601
    └──────────────────────────────────────────┘
                      │
          ┌───────────┤
          │           ▼
          │  ┌─────────────────────────────────┐
          │  │ ADD INFORMATION FOR IDENTIFYING ROUTE │──S1602
          │  │ TO ROAD LINKS CONSTITUTING AUXILIARY ROUTE │
          │  └─────────────────────────────────┘
          │           │
          │           ▼                    ┌─S1603
          │      ╱────────────────────╲
          │ No  ╱   INFORMATION ADDED TO  ╲
          └────╱ ROAD LINKS OF ALL AUXILIARY ROUTES ╲
               ╲            ?             ╱
                ╲────────────────────────╱
                      │ Yes
          ┌───────────┤
          │           ▼
          │  ┌──────────────────────┐
          │  │   RETRIEVE ROAD LINKS  │──S1604
          │  └──────────────────────┘
          │           │
          │           ▼
          │  ┌──────────────────────┐
          │  │ CALCULATE CANDIDATE    │──S1605
          │  │ COORDINATES OF ROAD LINKS │
          │  └──────────────────────┘
          │           │
          │           ▼            ┌─S1606
          │      ╱──────────────────╲
          │ No  ╱    CALCULATED       ╲
          └────╱ COORDINATES OF ALL ROAD LINKS? ╲
               ╲──────────────────────╱
                      │ Yes
                      ▼
    ┌──────────────────────────────────────────┐
    │ PRODUCES GROUPS EACH INCLUDES NEARBY ROAD LINKS │──S1607
    └──────────────────────────────────────────┘
                      │
                      ▼
    ┌──────────────────────────────────────────┐
    │   GIVE PRIORITIES TO PRODUCED GROUPS       │──S1608
    └──────────────────────────────────────────┘
                      │
                      ▼
                 ┌─────────┐
                 │   END   │
                 └─────────┘
```

# FIG. 17

# FIG. 18

```
            ┌─────────────────────┐
            │     PROCESS OF       │
            │    NAVIGATION        │
            └─────────────────────┘
                     │
                     ▼
    ┌──────────────────────────────────────────┐  S1801
    │ REFER TO INFORMATION ON POSITION OF VEHICLE │
    └──────────────────────────────────────────┘
                     │
                     ▼        S1802
              ◇─────────────────────────◇      No
              < AUXILIARY ROUTE IS PROVIDED? >──────┐
              ◇─────────────────────────◇          │
                     │ Yes                          │
                     ▼                              │
    ┌──────────────────────────────────────────┐  S1803  │
    │    REFER TO AUXILIARY-ROUTE-PROVIDED AREA   │        │
    └──────────────────────────────────────────┘        │
                     │                              │
                     ▼                              │
    ┌──────────────────────────────────────────┐  S1804  │
    │    DETERMINE WHETHER CURRENT POSITION IS    │        │
    │ OUTSIDE OR INSIDE AUXILIARY-ROUTE-PROVIDED AREA │    │
    └──────────────────────────────────────────┘        │
                     │                              │
                     ▼        S1805                 │
              ◇─────────────────────────────◇   No  │
              < OUTSIDE AUXILIARY-ROUTE-PROVIDED AREA? >──┤
              ◇─────────────────────────────◇       │
                     │ Yes                    ┌──────▼──────────────┐
                     ▼                        │ TO S207 SHOWN IN FIG. 2 │
    ┌──────────────────────────────────────────┐  S1806  └─────────────────────┘
    │ REQUEST SERVER DEVICE FOR NAVIGATION ROUTE FROM │
    │ POSITION OF VEHICLE AS STARTING POINT TO DESTINATION │
    └──────────────────────────────────────────┘
                     │
                     ▼
               ┌──────────┐
               │   END    │
               └──────────┘
```

# FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1019588 B
- JP 2001147132 A
- US 6381535 B1
- EP 1035403 A1
- EP 1508778 A1